(19) Europäisches Patentamt
European Patent Office
Office européen des brevets

(11) **EP 1 455 347 B1**

(12) **EUROPEAN PATENT SPECIFICATION**

(45) Date of publication and mention
of the grant of the patent:
**29.04.2009 Bulletin 2009/18**

(51) Int Cl.:
***G11B 7/085*** (2006.01)     ***G11B 7/09*** (2006.01)

(21) Application number: **04004441.4**

(22) Date of filing: **26.02.2004**

(54) **Tracking servo pull-in method and apparatus, and optical disk device provided with the same**

Verfahren und Vorrichtung zum Einführen der Spurfolge und damit versehene optische Plattenvorrichtung

Procédé et appareil de verrouillage de suivi de piste et dispositif de disque optique muni d'un tel appareil

(84) Designated Contracting States:
**DE FR**

(30) Priority: **27.02.2003 JP 2003050951**

(43) Date of publication of application:
**08.09.2004 Bulletin 2004/37**

(73) Proprietor: **NEC CORPORATION
Tokyo 108-8001, (JP)**

(72) Inventor: **Kamiya, Akihiro c/o NEC Corporation
Tokyo (JP)**

(74) Representative: **Vossius & Partner
Siebertstraße 4
81675 München (DE)**

(56) References cited:
**US-A- 5 307 333          US-B1- 6 388 963
US-B1- 6 400 662**

**Description**

BACKGROUND OF THE INVENTION

The present invention relates to a tracking servo operating method and a tracking servo apparatus in which no tracking error occurs even while an optical disk is in an unrecorded state and to an optical disk device using the same.

The present application claims priority of Japanese Patent Application No. 2003-050951 filed on February 27, 2003.

Application of optical disk technology which enables recording and reproducing of information via light with a high degree of reliability is expanding. With progress of the optical disk technology, kinds of recording media using optical disks are gradually increasing which include a CD-R (Compact Disk Recordable), CD-RW (CD-Rewritable), DVD-R (Digital Versatile Disk Recordable), DVD-RW (DVD-Rewritable) or a like. In order to record and reproduce information via light in any recording medium, it is required that an optical system of an optical disk device can provide high performance.

In order for an optical disk device to be able to record and reproduce information with high-speed and with high reliability, it is also required that a relation between an optical beam and an optical disk is normally maintained and, to achieve this, a variety of servo systems are attached to optical disk devices. Such the servo systems include a focusing servo which controls a position of an optical source so that, even when a disk has a warp and/or surface deflection, a spot of a beam fed from a light source laser applied on a signal track attains a specified size, a tracking servo to move a position of a beam spot so that the beam spot correctly tracks a signal track on a disk while an optical disk is rotating, a spindle servo to control rotation speed of a disk so that, even when there are changes in recording and reproducing positions on a surface of the optical disk, speed of a beam spot relative to a signal track becomes constant while the disk is rotating, or a like.

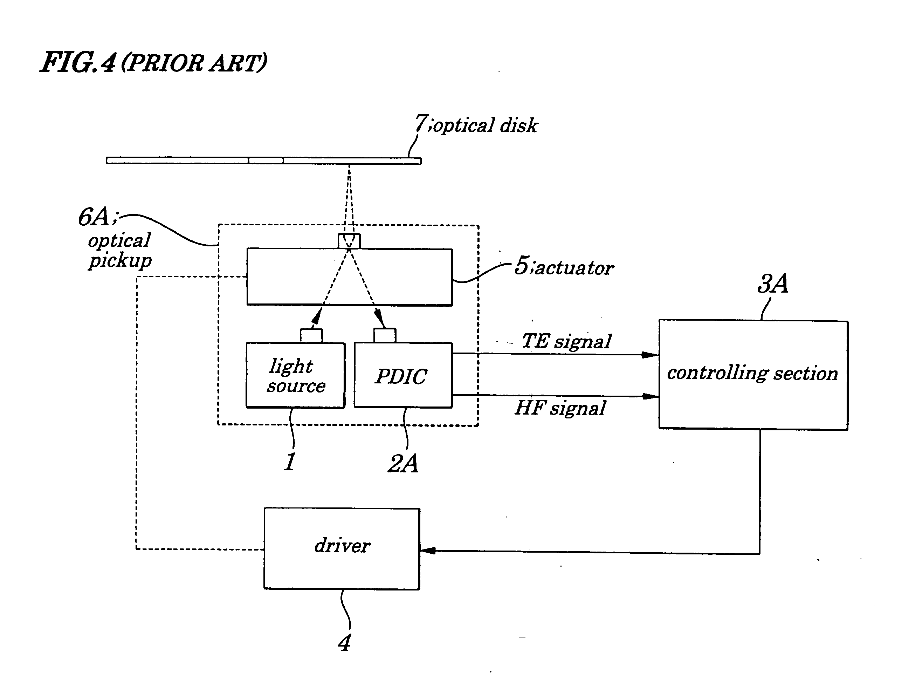

The present invention aims at improving performance of a tracking servo system, out of servos described above, which tracks a signal track. First, a conventional tracking servo is explained. Figure 4 is a schematic block diagram showing entire configurations of a conventional tracking servo. The conventional tracking servo system, as shown in Fig. 4, roughly includes a light source 1, a PDIC (Photo Detector IC) 2A, a controlling section 3A, a driver 4, and an actuator 5. Among them, the light source 1, PDIC 2A, actuator 5 make up an optical pickup 6A.

The light source 1 has a light emitting section made up of, for example, a semiconductor laser and forms a beam spot on an optical disk 7. The PDIC 2A has a light receiving section made up of, for example, photodiodes, receives feedback light from the optical disk 7 induced by a beam spot, converts the feedback light to an electrical signal and outputs an tracking error (TF) signal and a high frequency (HF) signal obtained by arithmetic computation on outputs from the light receiving section. The controlling section 3A has a microcomputer or a like and performs arithmetic operations according to the TE signal and HF signal fed from the PDIC2A to output a control signal to the driver 4. The driver 4 outputs a direct current signal to operate the actuator 5 in response to the control signal from the controlling section 3. The actuator 5 moves a beam spot on the optical disk 7 in response to the direct current signal fed from the driver 4.

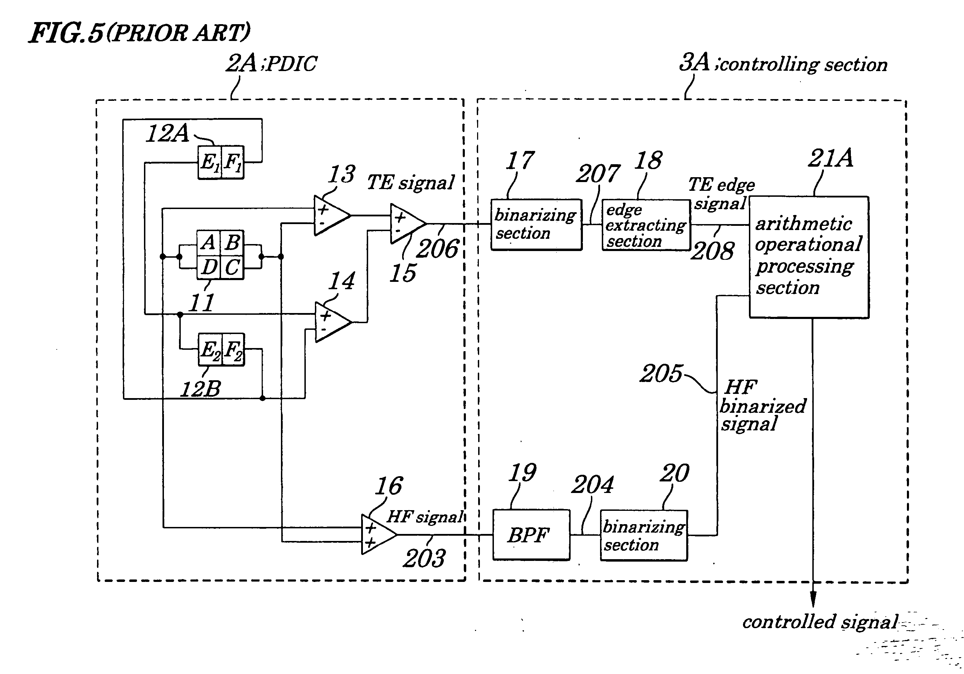

Figure 5 is a diagram showing detailed configurations of the PDIC 2A and the controlling section 3A in the conventional tracking servo system. The conventional PDIC 2A, as shown in Fig. 5, includes a multi-output photodetector 11, sub-photodetectors 12A and 12B, subtractors 13, 14, and 15, and an adder 16. The multi-output photodetector 11 is made up of four photodetector elements as a four-divided photodetector and the above four photodetector elements produce outputs A, B, C, and D, each of which produces one of outputs A, B, C, and D. The sub-photodetector 12A is made up of two photodetector elements as a two-divided photodetector and the above two photodetector elements produce outputs $E_1$ and $F_1$, each of which produces one of outputs $E_1$ and $F_1$. The sub-photodetector 12B is made up of two photodetector elements as a two-divided photodetector and the above two photodetector elements produce outputs $E_2$ and $F_2$, each of which produces one of outputs $E_2$ and $F_2$. Each of the substractors 13, 14, and 15 produces an output obtained subtracting one input from another input. The adder 16 produces an output obtained by adding both the above inputs.

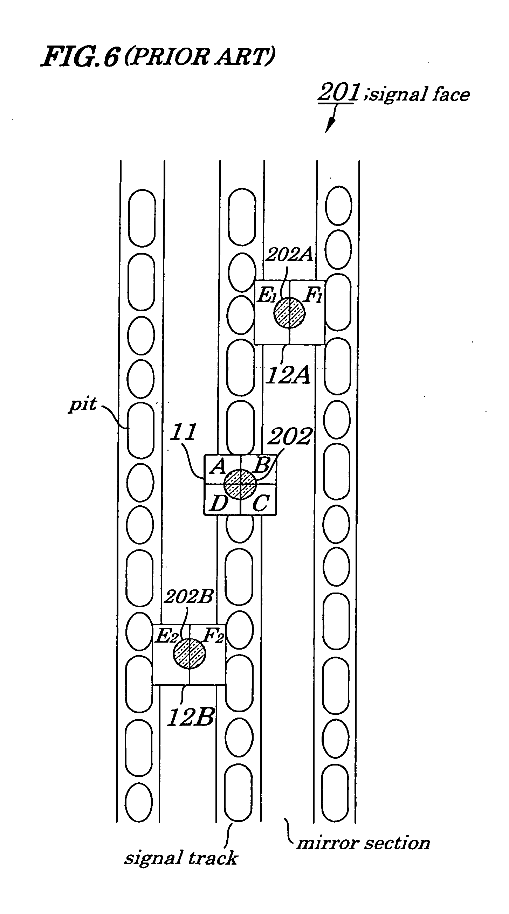

Figure 6 is a diagram showing a positional relation to a signal face 201 of the optical disk 7 between the multi-output photodetector 11 and sub-photodetectors 12A and 12B. Each of the sub-photodetectors 12A and 12B is placed in a position being displaced back and forth by 1/2 pitches of the signal track relative to the multi-output photodetector 11 and, when the multi-photodetector 11 is so placed as to correctly correspond to the signal track, each of the sub-photodetectors 12A and 12B also correctly corresponds to a mirror section mounted back and before each of the corresponding signal track. Light is applied from the light source 1 to produce a main beam spot 202 in a manner to be corresponded to the multi-photodetector 11 and light is applied also from the light source 1 to produce sub-beam spots 202A and 202B in a manner to be corresponded to sub-photodetectors 12A and 12B, respectively.

In the PDIC 2A, the subtractor 13 subtracts a signal (B + C) obtained by adding signals Band C output from the photodetector elements 211 and 212 making up the multi-photodetector 11 from a signal (A + D) obtained by adding signals A and D output from the photodetector elements 210 and 213 making up the multi-photodetector 11 and the subtractor 14 subtracts a signal $(F_1 + F_2)$ obtained by adding signals $F_1$ and $F_2$ output from the photodetector elements on the right side in Fig. 6 making up the sub-photodetectors 12A and 12B from a signal $(E_1 + E_2)$ obtained by adding signals $E_1$ and $E_2$ output from the photodetector elements on the left side in Fig. 6 making up the sub-photodetectors 12A and 13B and produces an output obtained by multiplying a result from the subtraction by K (K is a coefficient for correction) and the substractor 15 subtracts the output from the substractor 14 from the output from the subtractor 13 to produce a TE signal $\{ (A + D) - (B + C) \} - \{ (E_1 + E_2) - (F_1 + F_2) \}$.

Moreover, the adder 16 adds the signal (A + D) output from the multi-output photodetector 11 to the output signal (B + C) to produce an HF signal (A + B + C + D).

The signal $\{(A + D) - (B + C)\}$ is a tracking error signal produced only from the multi-output photodetector 11 and becomes maximum when the multi-output photodetector 11 is within a boundary of a signal track and becomes 0 (zero) when the multi-output photodetector 11 is at a center of the signal track. Moreover, a signal $\{ (E_1 + E_2) - (F_1 + F_2) \}$ is a tracking error signal produced only from the sub-photodetectors 12A and 12B and is phase-shifted by 180 ° and becomes maximum when the sub-photodetectors 12A and 12B is within a boundary of the signal track and becomes 0 (zero) when the sub-photodetectors 12A and 12B are at a center of the mirror section. By using signals from the sub-photodetectors 12A and 12B and selecting a proper value of the coefficient K, it is made possible to reduce an offset contained in the tracking error signal produced by the multi-output photodetector 11.

The reason why correction using outputs from the sub-photodetectors 12A and 12B is required is that a direct current offset occurring in the tracking error signal caused by a positional change of a beam spot which occurs due to horizontal movement of an objective lens by the actuator 5 has to be removed. Therefore, if no direct current offset occurs, such the correction using the outputs from the sub-photodetectors 12A and 12b is not required.

The conventional controlling section 3A, as shown in Fig. 5, has a binarizing section 17, an edge extracting section 18, a band-pass filter (BPF) 19, a binarizing section 20, and an arithmetic operational processing section 21A. The binarizing section 17 binarizes a TE signal made up of an analog signal and outputs a TE binarized signal. The edge extracting section 18 extracts a rising edge and a falling edge of the TE binarized signal and outputs a TE edge signal. The BPF 19 blocks a high frequency component and a low frequency component of an input HF signal and outputs an HF band-pass signal. The binarizing section 20 binarizes the HF band-pass signal and outputs an HF binarized signal. The arithmetic operational processing section 21A performs a required arithmetic operation on the TE edge signal fed from the edge extracting section 18 and the HF binarized signal fed from the binarizing section 20 and outputs a controlling signal.

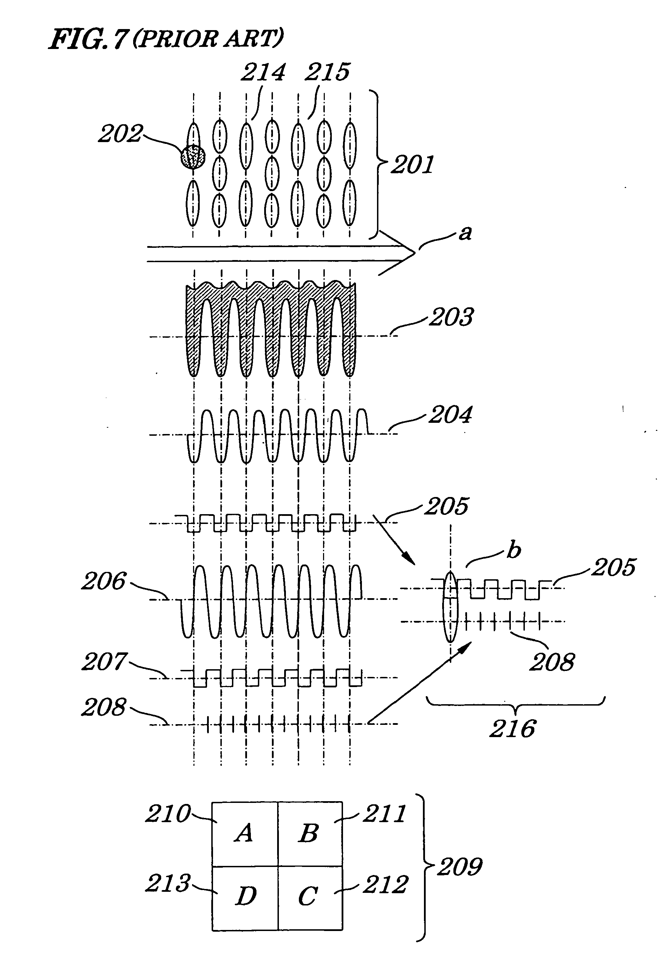

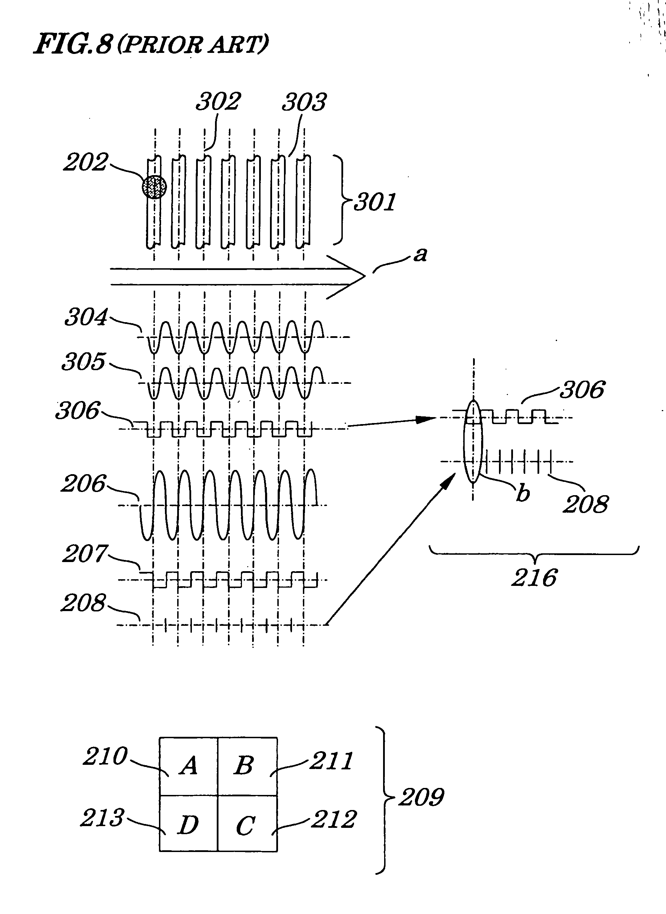

Operations of the conventional tracking servo are described by referring to Figs. 7 and 8. First, by referring to a timing chart shown in Fig. 7, operations of a tracking servo employed in recorded optical disks such as a CD-ROM, DVD-ROM, or a like are explained below. In Fig. 7, a signal face of a recorded optical disk 201, a beam spot 202 on the signal face 201, a center 214 of the signal track 201, and a mirror section 215 between the signal tracks are shown. Also, in Fig. 7, a four-divided photodetector 209 making up a multi-output photodetector 11, photodetector elements 210, 211, 212, and 213 making up the four-divided photodetector 209, and signals A, B, C, and D output from the photodetector elements 210, 211, 212, and 213, respectively, are shown.

Light applied to the signal face 201 from the light source 1 forms, according to a focusing operation of a focus servo not shown, the beam spot 202 normally having a constant size on the signal face 201. In this state, when the beam spot 202 intersects the signal face 201 in a direction of an arrow mark "a" in Fig. 7, signals A, B, C, and D are output from the photodetector elements 210, 211, 212. and 213, respectively, making up the four-divided photodetector 209 and the adder 16 performs an arithmetic operation of (A + B + C + D) to produce an HF signal 203.

The beam spot 202 crosses alternately the signal track and the mirror section and a change between light and shade occurs repeatedly and, therefore, the HF signal 203 has a waveform which changes with a frequency "f" ("f" indicates frequencies crossing the signal track per second) as shown in Fig. 7. On the other hand, in the case of a CD-ROM (CD Read Only Memory) in which signals have been stored, recorded CD-R, DVD-ROM (DVD-Read Only Memory), and recorded DVD-R, since a signal pit has been formed on the signal track, an HF signal 203 becomes a signal, as shown in its lower portion, having a modulation degree induced when the beam spot 202 crossed the signal pit. In Fig. 7, hatching performed on the HF signal 203 shows that the HF signal 203 has been modulated due to crossing of the beam spot 202 through the signal pit.

The HF signal 203 is converted to a HF band-pass signal 204 via the BPF 19. The HF band-pass signal 204 is binarized by the binarizing section 20 and an HF binarized signal 205 is produced. The HF binarized signal 205, when being at a low level, indicates that the beam spot 202 stays on a signal track and, when being at a high level, indicates that the beam spot 202 stays on a mirror section into which no signal has been written.

At the same time, a tracking error (TE) signal 206 is output from the multi-output photodetector 11 and the sub-photodetectors 12A and 12B. The binarizing section 17 binarizes the TE signal 206 to produce a TE binarized signal 207 and the edge extracting section 18 extracts a rising edge and falling edge of the TE binarized signal 207 to produce a TE edge signal 208. The TE edge signal 208 indicates that the beam spot 202 has reached either of a center 214 of the signal track and a center of the mirror section 215 between the signal tracks.

In Fig. 7, timing 216 is shown with which an operation of pulling in the tracking servo is performed. As shown by a mark "b" in Fig. 7, the arithmetic operational processing section 21A, in a state where an HF binarized signal 205 is at a low level, produces a control signal at the instant when a TE edge signal 208 is output and pulls in the servo system. This causes the driver 4 to activate the actuator 5 which controls a position of the beam spot 202 and, as a result, servo control is exerted so that the TE signal 206 normally becomes 0 (zero). This enables the beam spot 202 to correctly track a signal track. Therefore, since control is exerted so that the beam spot 202 is always applied on the center 214 of the signal track, information having been written in the signal track can be read without errors.

Next, operations of the tracking servo performed when a recording optical disk employed in a CD-R, CD-RW, DVD-R, DVD-RW, or a like is in an unrecorded state are described by referring to the timing chart shown in Fig. 8. In Fig. 8, a signal face 301 of an unrecorded optical disk, a beam spot 202 on the signal face 301, a center 302 of a groove to which a signal is written, and a land 303 between the grooves are shown. Moreover, in Fig. 8, a four-divided photodetector 209 making up a multi-output photodetector 11, photodetector elements 210, 211, 212, and 213 making up the four-divided photodetector 209, and signals A, B, C, and D output from the photodetector elements 210, 211, 212, and 213, respectively, are shown.

Light applied to the signal face 301 from the light source 1 forms, according to a focusing operation of a focus servo not shown, the beam spot 202 normally having a constant size on the signal face 301. In this state, when the beam spot 202 intersects the signal face 301 in a direction of an arrow mark "a" in Fig. 8, signals A, B, C, and D are output from the photodetector elements 210, 211, 212, and 213, respectively, making up the four-divided photodetector 209 and the adder 16 performs an arithmetic operation of (A + B + C + D) to produce an HF signal 304.

The beam spot 202 crosses alternately the groove and the land and a change between light and shade occurs repeatedly and, therefore, the HF signal 304 has a waveform which changes with a frequency "f" ("f" indicates frequencies crossing the groove per second) as shown in Fig. 8, however, in the case of the unrecorded CD-R, unrecorded DVD-R, or a like, since no signal pit has been formed in the groove to which a signal is to be written, the HF signal 304 is a signal not having been modulated. The HF signal 304 is converted to a HF band-pass signal 305 via the BPF 19. The HF band-pass signal 305 is binarized by the binarizing section 20 and an HF binarized signal 306 is produced. The HF binarized signal 306, when being at a low level, represents that a beam spot 202 stays on a groove to which a signal is to be written and, when being at a high level, represents that the beam spot 202 stays on a land to which a signal cannot be written.

At the same time, a TE signal 206 is output from the multi-output photodetector 11 and the sub-photodetectors 12A and 12B. The binarizing section 17 binarizes the TE signal 206 to produce a TE binarized signal 207 and the edge extracting section 18 extracts a rising edge and falling edge of the TE binarized signal 207 to produce a TE edge signal 208. The TE edge signal 208 indicates that the beam spot 202 has reached either of a center 214 of the groove to which a signal is to be written and a center of the land 303 between the grooves.

In Fig. 8, timing 216 is shown with which an operation of pulling in the tracking servo is performed. As shown by a mark "b" in Fig. 8, in the arithmetic operational processing section 21A, in a state where an HF binarized signal 306 is at a low level, a control signal is produced at the instant when a TE edge signal 208 is output to pull in the servo system. This causes the driver 4 to activate the actuator 5 which controls a position of the beam spot 202 and, as a result, servo control is exerted so that the TE signal 206 is normally made to become 0 (zero). This enables the beam spot 202 to correctly track a groove. Therefore, since control is exerted so that the beam spot 202 is always applied on the center 302 of the groove, information can be correctly written in the groove.

Thus, in the conventional tracking servo system, by using a signal produced from an HF signal and a signal produced from a tracking error signal, servo control is exerted so that no tracking error occurs. However, in the conventional tracking servo system, there are various problems as described below.

First, in the conventional tracking servo system, since a position of a signal track is detected according to a TE signal and an HF signal made up of the signal (A + B + C + D), if imbalance occurs in outputs from the four-divided photodetector, a phase-shift occurs in the HF signal due to imbalance (variations) in each of photodetector elements contained in the four-divided photodetector making up the multi-output photodetector 11, adherence of dust to optical components, or a like and, in the case of unrecorded media such as an unrecorded CD-R, unrecorded DVD-R, or a like, since no modulation of an HF signal induced by a signal pit takes place, a shift caused by the phase shift in the HF signal occurs between a position of a track specified by an HF binarized signal and an actual position of the signal track.

Now, when feedback light from an optical disk enters, while changing at a frequency "f", the multi-output photodetector 11 by passage of a beam spot crossing a groove on a signal face of the optical disk 7, if imbalance occurs in signal outputs from the multi-output photodetector made up of the four-output photodetector, a phase of each of signals A and D output from the photodetector making up the four-divided photodetector leads a signal having a frequency "f" by " $\theta$ ", the output (A + D) = S sin ($\omega t + \theta$ ) (where $\omega$ = 2nf and S denotes an amplitude of the output (A + D)). Similarly, when a phase of each of signals B and C output from the photodetector making up the four-output photodetector lags behind the signal having a frequency "f" by " $\theta$ ", the output (B + C) = S sin ($\omega t - \theta$ ) .

Here, if the output (A + D) is equal to the output (B + C) ,

$$\text{HF signal} = (A + D) + (B + C)$$
$$= S \sin(\omega t + \theta) + S \sin(\omega t - \theta)$$
$$= S \{ \sin(\omega t + \theta + \omega t - \theta) \cdot \cos(\omega t + \theta + \omega t - \theta)$$
$$= 2S \cos\theta \cdot \sin\omega t$$

Therefore, no phase shift occurs in the HF signal.

However, if imbalance occurs between the output (A + D) and the output (B + C) due to influences by imbalance among outputs from each of the photodetector making up the four-divided photodetector or by dust adhered to optical components or a like, a phase shift comes to occur in the HF signal.

Now, let it be assumed that a signal output (A + D) from the photodetector elements 210 and 213 is expressed by the signal output (A + D) = J sin ($\omega$t + θ) (J denotes an amplitude of the signal (A + D)) and that a signal output (B + C) from the photodetector elements 211 and 212 is given by expression of the signal output (B + C) = K sin ($\omega$t + θ) (K denotes an amplitude of the signal (B + C)), an HF signal made up of outputs (A + D) + (B + C) is expressed by a following equation:

$$\text{HF signal} = (A + D) + (B + C)$$
$$= J \sin(\omega t + \theta) + K \sin(\omega t - \theta)$$
$$= J ( \sin\omega t \cdot \cos\theta + \cos\omega t \cdot \sin\theta) + K (\sin\omega t \cdot \cos\theta$$
$$- \cos\omega t \cdot \sin\theta)$$
$$= (J + K) \cos\theta \cdot \sin\omega t + (J - K) \cos\omega t \cdot \sin\theta$$

Therefore, a phase shift occurs in a signal having a frequency "f" obtained when the output (A + D) is equal to the output (B + C).

Even if such the phase shift occurs, in the case of optical disk media in which signals have been recorded in advance such as a CD-ROM and DVD-ROM, since modulation of the HF signal induced by a signal pit takes place, the optical disk is not readily affected by the phase shift of the HF signal.

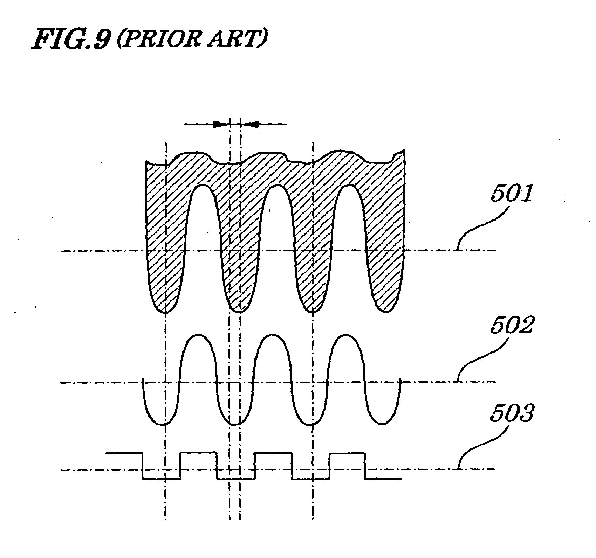

Figure 9 is a diagram explaining less influences by a phase shift on a HF binarized signal even if a phase shift occurs in the HF signal in the case of recorded optical disks. In Fig. 9, an HF signal 501 in which a phase shift has occurred due to imbalance in outputs from a multi-output photodetector, an HF band-pass signal 502 obtained by causing the HF signal 501 in which the phase shift has occurred to pass through the band-pass filter 19, and an HF binarized signal 503 obtained by binarizing the HF band-pass signal 502, are shown.

When a phase shift occurs in the HF signal 501, a phase shift also occurs in a waveform of a signal produced by feedback light from a portion containing no pit on a signal track and from a mirror section, as seen in an upper portion of a component of the HF signal 501. However, a phenomenon occurs that, since no phase shift occurs in a component produced by modulation induced by a pit on a signal track in the HF signal, a phase shift occurs between an component of the waveform of the HF signal appearing in its upper portion and the component of the waveform of the HF signal 501 appearing in its lower portion. When such the HF signal is made to pass through the band-pass filter 19, since a signal obtained at an intermediate point between a component of the HF signal appearing in its upper portion and a component of the HF signal modulated due to existence of a signal pit appearing in its lower portion, an amount of the phase shift caused by imbalance in outputs from the photodetector in the HF band-pass signal 502 becomes small and, therefore, a shift, caused by the phase shift in the HF signal, occurring between a position of a track specified by an HF binarized signal and an actual position of the track is small.

However, in the case of an unrecorded CD-R and/or unrecorded DVD-R, since no modulation of the HF signal induced by a signal pit takes place, a direct influence by imbalance in outputs from the photodetector occurs and, as a result, a shift between a position of a track specified by the HF binarized signal and an actual position of the track becomes large.

Secondary, in the conventional tracking servo, when a phase shift occurs in the HF signal, since there is a shift between a position of the track specified by the HF binarized signal and a position of the actual position of the track, an operation of pulling in the tracking servo is made difficult, which produces a problem that a servo operation is not correctly performed.

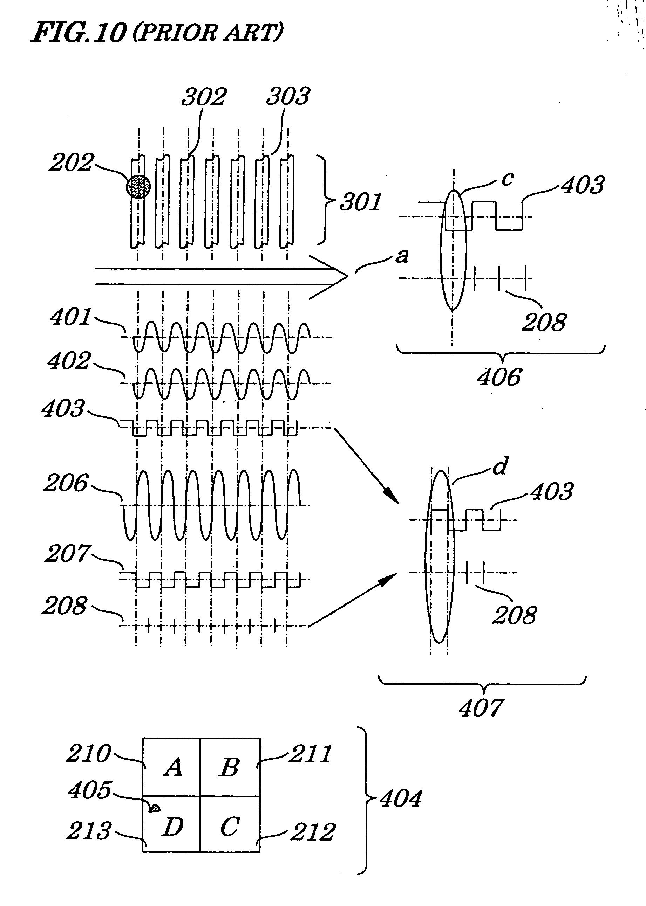

Next, by referring to Fig. 10, operations of the tracking servo are described which are performed when a phase shift occurs in an HF signal due to occurrence of a big difference between an output (A + D) and an output (B + C) in the multi-output photodetector 11. In Fig. 10, a signal face 301 of an unrecorded optical disk, a beam spot 202 on the signal face 301, a center 302 of a groove to which a signal is to be written, and a land 303 between the grooves, are shown. Also, in Fig. 10, a four-divided photodetector 404 making up a multi-output photodetector 11, photodetector elements 210, 211, 212, and 213 making up the four-divided photodetector 404, signals A, B, C, and D output from the photodetector elements 210, 211, 212, and 213, respectively, and dust adhered to the photodetector 213, are shown.

Light applied from a light source 1 to the signal face 301 forms, according to a focusing operation of a focusing servo (not shown), a beam spot 202 normally having a constant size on the signal face 301. In this state, when the beam spot 202 crosses the signal track in a direction of an arrow "a" in Fig. 10, the signals A, B, C, and D are output from the photodetector elements 210, 211, 212, and 213 making up the four-output photodetector, respectively, and the adder 16 performs an arithmetic operation of the signals (A + B + C + D) to produce an HF signal 401.

At this point, due to adherence of dust 405 adhered to the photodetector 213, a phase shift occurs in the HF signal 401 obtained by the arithmetic operation of (A + B + C + D), compared with its phase in a position of a groove on the optical disk. The HF signal 401 is converted via the BPF 19 to an HF band-pass signal 402. The HF band-pass signal 402 is then binarized by the binarizing section 20 and is output as an HF binarized signal 403. Though the HF binarized signal 403, when being at a low level, has to indicate that a beam spot 202 stays on a groove, due to the phase shift in the HF signal, the HF binarized signal 403 does not indicates a correct position of the groove.

At the same time, a TE signal 206 is output from the multi-output photodetector 11, sub-photodetectors 12A and 12B. The binarizing section 17 binarizes the TE signal 206 to produce a TE binarized signal 207. The edge extracting section 18 extracts a rising edge and falling edge of the TE binarized signal 207 to produce a TE edge signal 208. The TE edge signal 208 indicates that the beam spot 202 has reached either of a center 302 of a groove to which information is to be written and a center of the land 303 between the grooves. In Fig. 10, timing 406 is shown with which an operation of pulling in the tracking servo is performed when the phase shift in the HF binarized signal is small. As shown by a mark "c" in Fig. 10, the arithmetic operational processing section 21A, in a state where the HF binarized signal 403 is at a low level, produces a control signal at the instant when the TE edge signal 208 is output to pull in the servo system. This causes the driver 4 to activate the actuator 5 which controls a position of the beam spot 202 and, as a result, servo control is exerted so that the TE signal 206 is made to become 0 (zero). This enables the beam spot 202 to correctly track a groove.

On the other hand, timing 407 is shown with which an operation of pulling in the tracking servo is performed when the phase shift in the HF binarized signal is large. The arithmetic operational processing section 21A, in a state where the HF binarized signal 403 is at a low level, produces a control signal at the instant when the TE edge signal 208 is output and tries to pull in the servo system. However, if the phase shift between the HF binarized signal 403 and TE edge signal 208 is large, since no timing exists with which the tracking serve is pulled in, such the control as to make the TE signal 206 become 0 (zero) cannot be exerted.

US-B1-6 400 662 discloses a method and an apparatus of detecting track cross signals of an optical disc recording/reproducing device according to the preamble of claims 1, and 9.

In view of the above, it is an object of the present invention to provide a tracking servo operating, a tracking servo apparatus and an optical disk device using the same, each of which is able to be pulled in even when a phase shift in an HF signal occurs due to imbalance in outputs from a multi-output photodetector caused by imbalance in each of photodetector elements corporated therein, adherence of dust to optical components, or a like.

This object is achieved with the features of the claims.

According to a first aspect of the present invention, there is provided a tracking servo operating method including:

applying a beam spot on an optical disk on which a track is formed;
receiving feedback light from the optical disk by a light receiving means, which is equipped with a multi-divided photodetector including a first photo-detecting portion and a second photo-detecting portion being mounted in a manner so as to be divided right and left relative to a circumferential direction of the optical disk, receive feedback light from the optical disk; and
controlling an actuator through a driver so that a servo operation in which the beam spot tracks the track is performed according to an output from the light receiving means;

wherein control is so exerted that a high frequency differential signal is produced by calculating a difference between a first high frequency signal obtained by having the first photo-detecting portion receive first feedback light from the optical disk and a second high frequency signal obtained by having the second photo-detecting portion receive second feedback light from the optical disk and that, after a tracking error signal has been produced based on, at least, the produced high frequency differential signal, the produced tracking error signal is binarized and a tracking error edge signal indicating an edge of rising and falling of the binarized tracking error signal is extracted and that the first and second high frequency signals are binarized and, when the binarized first and second high frequency signals are at a specified same level, an operation of pulling in a tracking servo is performed in response to the tracking error edge signal.

In the foregoing, a preferable mode is one wherein setting is made so that the tracking error signal becomes 0 (zero) when the beam spot is positioned at a center of the track.

Another preferable mode is one wherein setting is made so that the tracking error edge signal is extracted when the beam spot has reached either of a center of the track or a center of a region between the two tracks adjacent to each other.

Still another preferable mode is one wherein control is exerted so that, after a band of each of the first and second high frequency signals has been filtered, the filtered signals are binarized and, when both the binarized first and second high frequency signals are at a low level, an operation of pulling in a tracking servo is performed in response to the tracking error edge signal.

An additional preferable mode is one wherein each of the first and second photo-detecting portions each are further divided into a front photo-detecting portion and a rear photo-detecting portion along the circumference direction of the track, and wherein the first and second high frequency signals each are obtained by adding a front output signal from the front photo-detecting portion and a rear output signal from the rear photo-detecting portion.

Furthermore preferable mode is one wherein movement of the beam spot by the actuator is accomplished by movement of an objective lens in the light source.

Still furthermore preferable mode is one wherein the light receiving means further includes a first sub-photodetector mounted in a position being isolated left by 1/2 pitches of the track in a direction of crossing the track from a center of the multi-divided photodetector and including a first left photo-detecting portion and a first right photo- detecting portion mounted in a manner so as to be divided right and left relative to a circumferential direction of the optical disk and a second sub-photodetector mounted in a position being isolated right by 1/2 pitches of the track in a direction of crossing the track from a center of the multi-divided photodetector and including a second left photo-detecting portion and a second right photo-detecting portion mounted in a manner so as to be divided right and left relative to the circumferential direction of the optical disk, and hereby being so configured as to receive feedback light of a sub-beam from the optical disk, the sub-beam being obtained by dividing a beam output from a light source and to obtain a first detecting signal by adding signals output from the first and second left photo-detecting portions in the first and second sub-photodetectors and a second detecting signal by adding signals output from the first and second right photo-detecting portions in the first and second sub-photodetectors, and to produce a sub-differential signal by calculating a difference between the obtained first detecting signal and the obtained second detecting signal, and then to produce the tracking error signal based on a difference between the produced sub-differential signal and the high frequency differential signal.

Also, a preferable mode is one wherein each of the first and second photo-detecting portions each are further divided into a front photo-detecting portion and a rear photo-detecting portion along the circumference direction of the track, and wherein the first and second high frequency signals each are obtained by adding a front output signal from the front photo-detecting portion and a rear output signal from the rear photo-detecting portion, and furthermore, wherein the light receiving means further includes a first sub-photodetector mounted in a position being isolated left by 1/2 pitches of the track in a direction of crossing the track from a center of the multi-divided photodetector and including a first left photo-detecting portion and a first right photo- detecting portion mounted in a manner so as to be divided right and left relative to a circumferential direction of the optical disk and a second sub-photodetector mounted in a position being isolated right by 1/2 pitches of the track in a direction of crossing the track from a center of the multi-divided photodetector and including a second left photo-detecting portion and a second right photo-detecting portion mounted in a manner so as to be divided right and left relative to the circumferential direction of the optical disk, and hereby being so configured as to receive feedback light of a sub-beam from the optical disk, the sub-beam being obtained by dividing a beam output from a light source and to obtain a first detecting signal by adding signals output from the first and second left photo-detecting portions in the first and second sub-photodetectors and a second detecting signal by adding signals output from the first and second right photo-detecting portions in the first and the second sub- photodetectors, and to produce a sub-differential signal by calculating a difference between the obtained first detecting signal and the obtained second detecting signal, and then to produce the tracking error signal based on a difference between the produced sub-differential signal and the high frequency differential signal.

According to a second aspect of the present invention, there is provided a tracking servo apparatus including:

a light source to apply a beam spot on an optical disk on which a track is formed;

a light receiving means having a multi-divided photodetector including a first photo-detecting portion and a second photo- detecting portion being mounted in a manner so as to be divided right and left relative to a circumferential direction of the optical disk to produce a first high frequency signal by having the first photo-detecting portion receive first feedback light from the optical disk and a second high frequency signal by having the second photo-detecting portion receive second feedback light from the optical disk and to produce a high frequency differential signal by calculating a difference between the produced first high frequency signal and the produced second high frequency signal and to produce a tracking error signal based on, at least, the produced high frequency differential signal;

a controlling means to binarize the tracking error signal fed from the light receiving means and to extract a tracking error edge signal indicating an edge of rising and falling of the binarized tracking error signal and, after having filtered a band of each of the first and second high frequency signals fed from the light receiving means, to binarize the filtered signals and to produce, when the binarized first and second high frequency signals are at a specified same level, a control signal to start a servo operation in response to the tracking error edge signal;

a driver to produce a driving signal according to the control signal; and

an actuator to move the beam spot according to the driving signal fed from the driver,

wherein control is exerted so that an operation of pulling in a tracking servo is performed in response to the tracking error edge signal.

According to a third aspect of the present invention, there is provided an optical disk device provided with a tracking servo apparatus including:

a light source to apply a beam spot on an optical disk on which a track is formed;

a light receiving means having a multi-divided photodetector including a first photo-detecting portion and a second photo-detecting portion being mounted in a manner so as to be divided right and left relative to a circumferential direction of the optical disk to produce a first high frequency signal by having the first photo-detecting portion receive first feedback light from the optical disk and a second high frequency signal by having the second photo-detecting portion receive second feedback light from the optical disk and to produce a high frequency differential signal by calculating a difference between the produced first high frequency signal and the produced second high frequency signal and to produce a tracking error signal based on, at least, the produced high frequency differential signal;

a controlling means to binarize the tracking error signal fed from the light receiving means and to extract a tracking error edge signal indicating an edge of rising and falling of the binarized tracking error signal and, after having filtered a band of each of the first and second high frequency signals fed from the light receiving means, to binarize the filtered signals and to produce, when the binarized first and second high frequency signals are at a specified same level, a control signal to start a servo operation at an instant when the tracking error edge signal is produced;

a driver to produce a driving signal according to the control signal; and

an actuator to move the beam spot according to the driving signal fed from the driver,

whereby control is exerted so that an operation of pulling in a tracking servo is performed in response to the tracking error edge signal.

With the above configurations, while an optical disk for recording such as a CD-R, CD-RW, DVD-R, DVD-RW, or a like is in an unrecorded state, even when imbalance in outputs from a multi-output photodetector occurs due to imbalance in each photodetector elements making up the multi-output photodetector and/or due to adherence of dust to optical components, there is no fear of occurrence of a shift caused by a phase shift in an HF signal between a position of a track specified by the HF signal and an actual position of a track. Since correct timing for pulling in a tracking servo to a center of a groove is provided, servo control can be normally exerted.

The above and other objects, advantages, and features of the present invention will be more apparent from the following description taken in conjunction with the accompanying drawings in which:

Fig. 1 is a schematic block diagram showing entire configurations of a tracking servo system according to an embodiment of the present invention;

Fig. 2 is a diagram showing detailed configurations of a PDIC and a controlling section employed in the tracking servo according to the same embodiment;

Fig. 3 is a timing chart explaining operations of the tracking servo according to the same embodiment performed when imbalance occurs in outputs from each photodetector making up a multi-output photodetector;

Fig. 4 is a schematic block diagram showing entire configurations of a conventional tracking servo system;

Fig. 5 is a diagram showing detailed configurations of a PDIC and a controlling section employed in the conventional tracking servo system;

Fig. 6 is a diagram showing a positional relation to a signal surface of an optical disk between a multi-output photodetector and sub-photodetectors in the conventional tracking servo system;

Fig. 7 is a diagram explaining operations of a recorded optical disk in the conventional tracking servo system;

Fig. 8 is a diagram explaining operations of a unrecorded optical disk in the conventional tracking servo system;

Fig. 9 is a diagram explaining less influences by a phase shift on an HF binarized signal even if a phase shift occurs in an HF signal in the case of recorded optical disks in the conventional tracking servo system; and

Fig. 10 is a diagram explaining operations of a tracking servo performed when a phase shift occurs in an HF signal in the multi-output photodetector in the conventional tracking servo system.

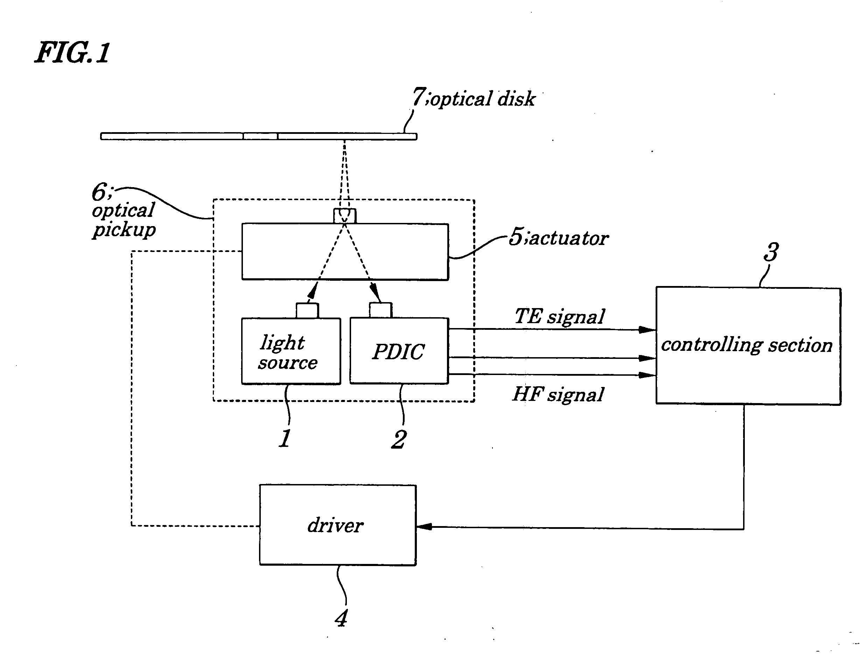

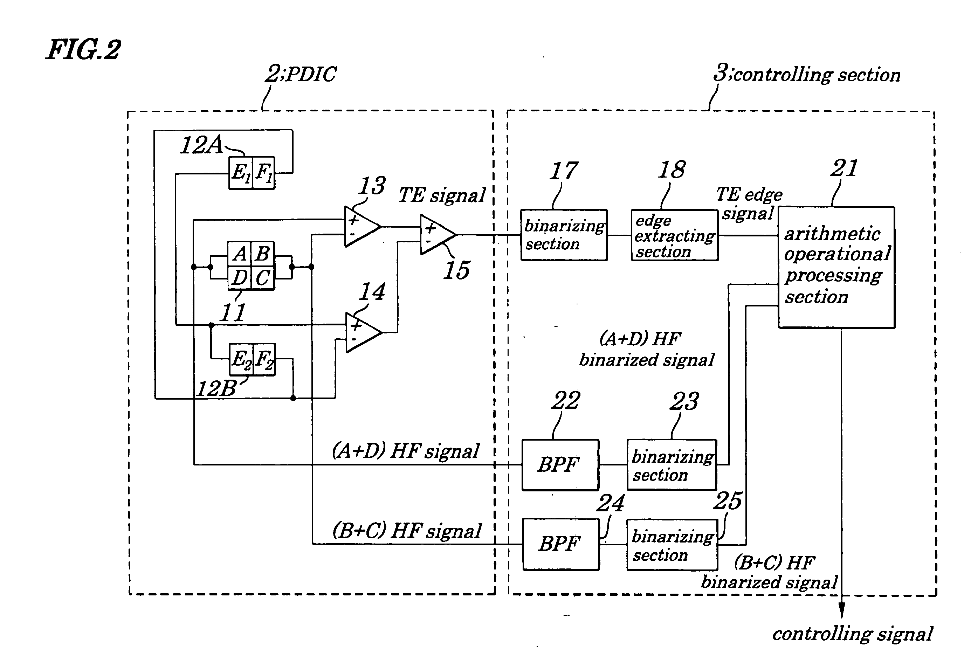

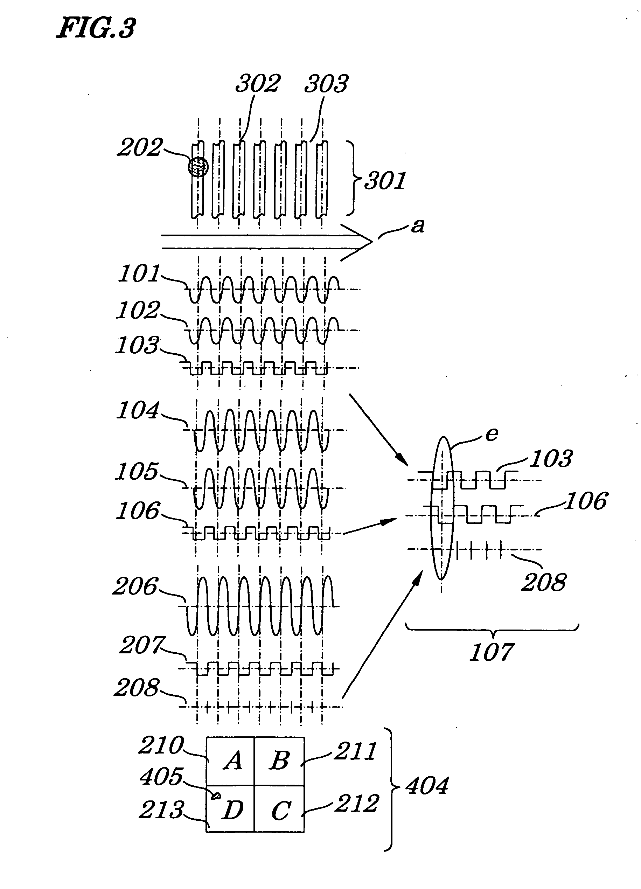

Figure 1 is a schematic block diagram showing entire configurations of a tracking servo according to an embodiment of the present invention. Figure 2 is a diagram showing detailed configurations of a PDIC and a controlling section employed in the tracking servo of the present invention. Figure 3 is a timing chart explaining operations of the tracking servo of the present invention performed when imbalance occurs in outputs from each photodetector elements making up a multi-output photodetector.

The tracking servo of the embodiment, as shown in Fig. 1, chiefly includes a light source 1, a PDIC 2, a controlling section 3, a driver 4, and an actuator 5. The light source 1, PDIC 2, and actuator 5, as a whole, make up an optical pickup 6. Out of them, configurations and functions of the light source 1, driver 4, and actuator 5 are the same as those shown in Fig. 4 and detailed descriptions of them are omitted accordingly.

The PDIC 2 has a light receiving section made up of, for example, photodiodes, receives feedback light from an optical disk 7 induced by a beam spot, converts the feedback light to an electrical signal and outputs an tracking error (TF) signal and a high frequency (HF) signal obtained by arithmetic computation on outputs from the light receiving section. The controlling section 3 has a microcomputer or a like and performs arithmetic operations according to the TE signal and HF signal fed from the PDIC 2 to output a control signal to the driver 4.

The PDIC 2 of the embodiment, as shown in Fig. 2, includes a multi-output photodetector 11, sub-photodetectors 12A and 12B, subtractors 13, 14, and 15. Out of them, configurations and functions of the multi-output photodetector 11, the sub-photodetectors 12A and 12B, subtractors 13, 14, and 15 are the same as those shown in Fig. 5.

In the PDIC 2, as in the case of the conventional tracking servo shown in Fig. 5, the subtractor 13 subtracts a signal (B + C) obtained by adding signals B and C output from the photodetector elements making up the multi-photodetector 11 from a signal (A + D) obtained by adding signals A and D output from the photodetector elements 210 and 213 making up the multi-photodetector 11 and the subtractor 14 subtracts a signal $(F_1 + F_2)$ obtained by adding signals $F_1$ and $F_2$ output from the photodetector elements on the right side in Fig. 2 making up the sub-photodetectors 12A and 12B from a signal $(E_1 + E_2)$ obtained by adding signals $E_1$ and $E_2$ output from the photodetector elements on the left side in Fig. 2 making up the sub-photodetectors 12A and 12B and produces an output obtained by multiplying a result from the subtraction by K (K is a coefficient for correction) and the substractor 15 subtracts the output from the substractor 14 from the output from the subtractor 13 and produces a TE signal made up of outputs $\{(A + D) - (B + C)\} - \{(E_1 + E_2) - (F_1 + F_2)\}$. However, adding operation is not performed on a (A + D) HF signal and a (B + C) HF signal output from the multi-output photodetector 11 and these signals are output as they are.

The controlling section 3 of the embodiment, as shown in Fig. 2, has a binarizing section 17, an edge extracting section 18, band-pass filters (BPF) 22 and 24, binarizing sections 23 and 25, and an arithmetic operational processing section 21. Out of them, configurations and functions of the binarizing section 17 and edge extracting section 18 are the same as those in the conventional tracking servo shown in Fig. 5.

The BPF 22 blocks a high frequency component and low frequency component contained in the (A + D) HF signal and outputs an HF band-pass signal. The binarizing section 23 binarizes the HF band-pass signal fed from the BPF 22 and outputs a (A + D) HF binarized signal. The BPF 24 blocks a high frequency component and low frequency component contained in the (B + C) HF signal and outputs an HF band-pass signal. The binarizing section 25 binarizes the HF band-pass signal fed from the BPF 24 and outputs a (B + C) HF binarized signal. The arithmetic operational processing section 21 performs required computation using a TE edge signal fed from the edge extracting section 18, the (A + D) HF binarized signal fed from the binarizing section 23, and the (B + C) HF binarized signal fed from the binarizing section 25 to produce a control signal.

Next, by referring to Fig. 3, operations of the tracking servo of the present invention are described which are performed when optical disks for recording such as a CD-R, CD-RW, DVD-R, DVD-RW, or a like are in an unrecorded state. In Fig. 3, a signal face 301 of an unrecorded optical disk, a beam spot 202 on the signal face 301, a center 302 of a groove to which a signal is to be written, and a land 303 between grooves are shown. Also, a four-divided photodetector 404 making up the multi-output photodetector 11, and photodiodes 210, 211, 212, and 213 making up the four-divided photodetector are shown in Fig. 3. Dust 405 adhered to the photodetector 213 is also shown. Signals A, B, C, and D output, respectively, from the photodetector elements 210, 211, 212, and 213 are shown.

Light applied from a light source 1 to the signal face 301 forms, according to a focusing operation of a focusing servo (not shown), a beam spot 202 normally having a constant size on the signal face 301. In this state, when the beam spot 202 crosses the signal face 301 in a direction of an arrow "a" in Fig. 3, a (A + D) HF signal 101 is output from the photodetector elements 210 and 213 making up the four-divided photodetector 404 and a (B + C) HF signal 104 is output from the photodetector elements 211 and 212.

At this point, the (A + D) HF signal 101, since its phase leads a HF signal having a frequency "f" used when the beam spot 202 crosses a groove on the signal face 301, is expressed as P sin (ω t +δ) (where δ is an amount in which a phase leads and P denotes an amplitude of the (A + D) HF signal). The (B + C) HF signal 104, since its phase lags behind the HF signal having the frequency "f", is expressed as Q sin (ωt-δ) (where δ is an amount in which a phase lags and Q denotes an amplitude of the (B + C) HF signal). In this case, due to dust adhered to the photodetector 213, the amplitude P of the (A + D) HF signal 101 is smaller than the amplitude Q of the (B + C) HF signal 104.

In the controlling section 3, a (A + D) HF band-pass signal 102 is produced via the BPF 22 from the (A + D) signal 101 and a (A + D) HF binarized signal 103 is produced via the binarizing section 23 from the (A + D) HF band-pass signal 102, both of which are input to the arithmetic operational processing section 21 and, at the same time, a (B + C) HF band-pass signal 105 is produced via the BPF 24 from the (B + C) HF signal 104 and a (B + C) HF binarized signal 106 is produced via the binarizing section 25 from the (B + C) HF band-pass signal 105, both of which are input also to the arithmetic operational processing section 21.

At the same time, the multi-output photodetector 11 and the sub-photodetectors 21A and 12B output a TE signal 206, the binarizing section 17 produces a TE binarized signal 207 by binarizing the TE signal 206, and the edge extracting section 18, by extracting a rising edge and falling edge of the TE binarized signal 207, produces a TE edge signal 208. The TE edge signal 208 indicates that the beam spot 202 has reached either of a center 302 of the groove to which information is to be written and a center of a land 303 between the grooves.

In Fig. 3, timing 107 is shown with which an operation of pulling in the tracking servo is performed. As shown by a mark "e" in Fig. 3, the arithmetic operational processing section 21, in a state where both the (A + D) HF binarized signal 103 and the (B + C) HF binarized signal 106 are at a low level, produces a control signal at the instant when the TE edge signal 208 is output to pull in the servo system. This causes the driver 4 to activate the actuator 5 which controls a position of the beam spot 202 and, as a result, servo control is exerted so that the TE signal 206 is normally made to become 0 (zero). This enables the beam spot 202 to correctly track a groove. Therefore, since control is exerted so that the beam spot 202 is always applied on the center 302 of the groove, information can be correctly written in the groove.

Thus, in the tracking servo of the embodiment of the present invention, since the (A + D) HF binarized signal 103 and the (B + C) HF binarized signal 106 are separately produced without undergoing adding process of the signal (A + B + C + D) output from the multi-output photodetector when an HF binarized signal is produced and the servo system is pulled in according to occurrence of the TE edge signal 208 in a state where both the above signals 103 and 106 are at a low level, when optical disks for recording such as a CD-R, CD-RW, DVD-R, DVD-RW, or a like are in an unrecorded state, even when imbalance occurs in outputs from the multi-output photodetector due to imbalance in each photodetector making up the multi-output photodetector 11 and/or due to adherence of dust to optical components or a like, there is no fear of occurrence of a shift between a position of a track specified by an HF binarized signal and an actual position of a track which is caused by a phase shift in the HF signal and correct timing for pulling in a tracking servo at a center of a groove can be provided, which can prevent servo control from being incorrectly exerted.

Moreover, in the above embodiment, only the case where optical disks are in an unrecorded state is described. However, in the case where optical disks are in a recorded state, as is apparent from the above description, since an amplitude of the (A + D) HF signal is almost equal to an amplitude of the (B + C) HF signal, the tracking servo of the present invention can be applied to the case where the optical disks are in a recorded state.

It is apparent that the present invention is not limited to the above embodiments but may be changed and modified without departing from the scope and spirit of the invention. For example, in the PDIC 2 of the above embodiment, the TE edge signal is produced by using the multi-output photodetector 11 made up of the four-divided photodetector and the sub-photodetectors 12A and 12B made up of the two-divided photodetector, however, in the case where no offset occurs in a signal output from the multi-photodetector 11, the sub-photodetectors 12A and 12B can be omitted and the subtractors 14 and 15 are not needed accordingly.

Also, if the HF binarized signal is at a high level, when the beam spot stays on a track and the HF binarized signal is at a low level, when the beam spot stays on a mirror section, in a state where both the (A + D) HF binarized signal and the (B + C) HF binarized signal are at a high level, a control signal may be produced at the instant when the TE edge signal is output to pull in the servo system.

**Claims**

**1.** A tracking servo operating method comprising:

applying a beam spot (202) on an optical disk (7) on which a track is formed; receiving feedback light from said optical disk (7) by a light receiving means (2), which is equipped with a multi-divided photodetector (11) comprising a first photo-detecting portion (210, 213) and a second photo-detecting portion (211, 212) being mounted in a manner so as to be divided right and left relative to a circumferential direction of said optical disk (7), receive feedback light from said optical disk (7); and

producing a high frequency differential signal by calculating a difference between a first high frequency signal obtained by having said first photo-detecting portion (210, 213) receive first feedback light from said optical disk (7) and a second high frequency signal obtained by having said second photo-detecting portion (211, 212) receive second feedback light from said optical disk (7) and, after a tracking error signal has been produced based on, at least, the produced high frequency differential signal,

controlling an actuator (5) through a driver (4) so that a servo operation in which said beam spot (202) tracks said track is performed according to an output from said light receiving means (2);

wherein control is so exerted that the produced tracking error signal is binarized and a tracking error edge signal indicating an edge of rising and falling of the binarized tracking error signal is extracted, **after having filtered a band of each of said first and second high frequency signals fed from said light receiving means (2),** and said first and second high frequency signals are binarized,

**characterized in that** the start of pulling in a tracking servo is performed in response to said tracking error edge signal, when the binarized first and second high frequency signals are at a specified same level.

2. The method accoding to Claim 1, wherein setting is made so that said tracking error signal becomes 0 (zero) when said beam spot (202) is positioned at a center of said track.

3. The method according to Claim 1 or 2, wherein setting is made so that said tracking error edge signal is extracted when said beam spot (202) has reached either of a center of said track or a center of a region between the two tracks adjacent to each other.

4. The method according to Claim 1, 2, or 3, wherein control is exerted so that, after a band of each of said first and second high frequency signals has been filtered, the filtered signals are binarized and, when both the binarized first and second high frequency signals are at a low level, an operation of pulling in a tracking servo is performed in response to said tracking error edge signal.

5. The method according to any one of Claims 1 to 4, wherein each of said first and second photo-detecting portions (210, 211, 212, 213) each are further divided into a front photo-detecting portion and a rear photo-detecting portion along the circumference direction of said track, and wherein said first and second high frequency signals each are obtained by adding a front output signal from said front photo-detecting portion and a rear output signal from said rear photo-detecting portion.

6. The method according to any one of Claims 1 to 5, wherein movement of said beam spot (202) by said actuator (5) is accomplished by movement of an objective lens in said light source (1).

7. The method according to any one of Claims 1 to 6, wherein said light receiving means (2) further comprises a first sub-photodetector (12A) mounted in a position being isolated left by 1/2 pitches of said track in a direction of crossing said track from a center of said multi-divided photodetector (11) and comprising a first left photo-detecting portion and a first right photo- detecting portion mounted in a manner so as to be divided right and left relative to a circumferential direction of said optical disk (7) and a second sub-photodetector (12B) mounted in a position being isolated right by 1/2 pitches of said track in a direction of crossing said track from a center of said multi-divided photodetector (11) and comprising a second left photo-detecting portion and a second right photo-detecting portion mounted in a manner so as to be divided right and left relative to the circumferential direction of said optical disk (7), and hereby being so configured as to receive feedback light of a sub-beam (202A, 202B) from said optical disk (7), said sub-beam (202A, 202B) being obtained by dividing a beam output from a light source (1) and to obtain a first detecting signal by adding signals output from said first and second left photo-detecting portions in said first and second sub-photodetectors (12A, 12B) and a second detecting signal by adding signals output from said first and second right photo-detecting portions in said first and second sub-photodetectors (12A, 12B), and to produce a sub-differential signal by calculating a difference between the obtained first detecting signal and the obtained second detecting signal, and then to produce said tracking error signal based on a difference between the produced sub-differential signal and said high frequency differential signal.

8. The method according to any one of Claims 1 to 7, wherein each of said first and second photo-detecting portions (210, 211, 212, 213) each are further divided into a front photo-detecting portion and a rear photo-detecting portion along the circumference direction of said track, and wherein said first and second high frequency signals each are obtained by adding a front output signal from said front photo-detecting portion and a rear output signal from said rear photo-detecting portion, and furthermore,

wherein said Light receiving means (2) further comprises a first sub-photodetector (12A) mounted in a position being isolated left by 1/2 pitches of said track in a direction of crossing said track from a center of said multi-divided photodetector (11) and comprising a first left photo-detecting portion and a first right photo- detecting portion mounted in a manner so as to be divided right and left relative to a circumferential direction of said optical disk (7) and a second sub-photodetector (12B) mounted in a position being isolated right by 1/2 pitches of said track in a direction of crossing said track from a center of said multi-divided photodetector (11) and comprising a second left photo-detecting portion and a second right photo-detecting portion mounted in a manner so as to be divided right and left relative to the circumferential direction of said optical disk (7), and hereby being so configured as to receive feedback light of a sub-beam (202A, 202B) from said optical disk (7), said sub-beam (202A, 202B) being obtained by dividing a beam output from a light source (1) and to obtain a

9. A tracking servo apparatus comprising:

> a light source (1) to apply a beam spot (202) on an optical disk (7) on which a track is formed;
> a light receiving means (2) having a multi-divided photodetector (11) comprising a first photo-detecting portion (210, 213) and a second photo-detecting portion (211, 212) being mounted in a manner so as to be divided right and left relative to a circumferential direction of said optical disk (7) to produce a first high frequency signal by having said first photo-detecting portion (210, 213) receive first feedback light from said optical disk (7) and a second high frequency signal by having said second photo-detecting portion (211, 212) receive second feedback light from said optical disk (7) and to produce a high frequency differential signal by calculating a difference between the produced first high frequency signal and the produced second high frequency signal and to produce a tracking error signal based on, at least, the produced high frequency differential signal;
> a controlling means (3) to binarize said tracking error signal fed from said light receiving means (2) and to extract a tracking error edge signal indicating an edge of rising and falling of the binarized tracking error signal and, after having filtered a band of each of said first and second high frequency signals fed from said light receiving means (2), to binarize the filtered signals to produce a control signal **according to an output from said light receiving means (2),**
> a driver (4) to produce a driving signal in response to said control signal; and
> an actuator (5) to move said beam spot (202) in response to said driving signal fed from said driver (4),

> **characterized in that** said controlling means starts pulling in a tracking servo in response to said tracking error edge signal, **when the binarized first and second high frequency signals are at a specified same level.**

10. The apparatus accoding to Claim 9, wherein setting is made so that said tracking error signal becomes 0 (zero) when said beam spot (202) is positioned at a center of first detecting signal by adding signals output from said first and second left photo-detecting portions in said first and second sub- photodetectors (12A, 12B) and a second detecting signal by adding signals output from said first and second right photo-detecting portions in said first and second sub-photodetectors (12A, 12B), and to produce a sub-differential signal by calculating a difference between the obtained first detecting signal and the obtained second detecting signal, and then to produce said tracking error signal based on a difference between the produced sub-differential signal and said high frequency differential signal. said track.

11. The apparatus according to Claim 9 or 10, wherein setting is made so that said tracking error edge signal is extracted when said beam spot (202) has reached either of a center of said track or a center of a region between the two tracks adjacent to each other.

12. The apparatus according to Claim 9, 10 or 11, wherein control is exerted so that, after a band of each of said first and second high frequency signals has been filtered, the filtered signals are binarized and, when both the binarized first and second high frequency signals are at a low level, an operation of pulling in a tracking servo is performed in response to said tracking error edge signal.

13. The apparatus according to any one of Claims 9 to 12, wherein each of said first and second photo-detecting portions (210, 211, 212, 213) each are further divided into a front photo-detecting portion and a rear photo-detecting portion along the circumference direction of said track, and wherein said first and second high frequency signals each are obtained by adding a front output signal from said front photo-detecting portion and a rear output signal from said rear photo-detecting portion.

**14.** The apparatus according to any one of Claims 9 to 13, wherein movement of said beam spot (202) by said actuator (5) is accomplished by movement of an objective lens in said light source (1).

**15.** The apparatus according to any one of Claims 9 to 14, wherein said light receiving means (2) further comprises a first sub-photodetector (12A) mounted in a position being isolated left by 1/2 pitches of said track in a direction of crossing said track from a center of said multi-divided photodetector (11) and comprising a first left photo-detecting portion and a first right photo- detecting portion mounted in a manner so as to be divided right and left relative to a circumferential direction of said optical disk (7) and a second sub-photodetector (12B) mounted in a position being isolated right by 1/2 pitches of said track in a direction of crossing said track from a center of said multi-divided photodetector (11) and comprising a second left photo-detecting portion and a second right photo-detecting portion mounted in a manner so as to be divided right and left relative to the circumferential direction of said optical disk (7), and hereby being so configured as to receive feedback light of a sub-beam (202A, 202B) from said optical disk (7), said sub-beam (202A, 202B) being obtained by dividing a beam output from a light source (1) and to obtain a first detecting signal by adding signals output from said first and second left photo-detecting portions in said first and second sub-photodetectors (12A, 12B) and a second detecting signal by adding signals output from said first and second right photo-detecting portions in said first and second sub-photodetectors (12A, 12B), and to produce a sub-differential signal by calculating a difference between the obtained first detecting signal and the obtained second detecting signal, and then to produce said tracking error signal based on a difference between the produced sub-differential signal and said high frequency differential signal.

**16.** The apparatus according to any one of Claims 9 to 15, wherein each of said first and second photo-detecting portions (210, 211, 212, 213) each are further divided into a front photo-detecting portion and a rear photo-detecting portion along the circumference direction of said track, and wherein said first and second high frequency signals each are obtained by adding a front output signal from said front photo-detecting portion and a rear output signal from said rear photo-detecting portion, and furthermore,
wherein said light receiving means (2) further comprises a first sub-photodetector (12A) mounted in a position being isolated left by 1/2 pitches of said track in a direction of crossing said track from a center of said multi-divided photodetector (11) and comprising a first left photo-detecting portion and a first right photo- detecting portion mounted in a manner so as to be divided right and left relative to a circumferential direction of said optical disk (7) and a second sub-photodetector (12B) mounted in a position being isolated right by 1/2 pitches of said track in a direction of crossing said track from a center of said multi-divided photodetector (11) and comprising a second left photo-detecting portion and a second right photo-detecting portion mounted in a manner so as to be divided right and left relative to the circumferential direction of said optical disk (7), and hereby being so configured as to receive feedback light of a sub-beam (202A, 202B) from said optical disk (7), said sub-beam (202A, 202B) being obtained by dividing a beam output from a light source (1) and to obtain a first detecting signal by adding signals output from said first and second left photo-detecting portions in said first and second sub- photodetectors (12A, 12B) and a second detecting signal by adding signals output from said first and second right photo-detecting portions in said first and second sub-photodetectors (12A, 12B), and to produce a sub-differential signal by calculating a difference between the obtained first detecting signal and the obtained second detecting signal, and then to produce said tracking error signal based on a difference between the produced sub-differential signal and said high frequency differential signal.

**17.** An optical disk (7) device provided with a tracking servo apparatus according to any one of claims 9 to 16.

**Patentansprüche**

**1.** Verfahren zum Betreiben einer Spursteuerungs-Servo mit den Schritten:

Zuführen eines Strahlflecks (202) auf eine optische Platte (7), auf der eine Spur ausgebildet ist;
Empfangen von Rückkopplungslicht von der optischen Platte (7) durch eine Lichtempfangseinrichtung (2), die einen mehrfach geteilten Fotodetektor (11) mit einem ersten Fotodetektionsabschnitt (210, 213) und einem zweiten Fotodetektionsabschnitt (211, 212) aufweist, der derart angeordnet ist, dass er bezüglich einer Umfangsrichtung der optischen Platte (7) rechts und links geteilt ist, um Rückkopplungslicht von der optischen Platte (7) zu empfangen; und
Erzeugen eines Hochfrequenz-Differenzsignals durch Berechnen einer Differenz zwischen einem ersten Hochfrequenzsignal, das erhalten wird, indem der erste Fotodetektionsabschnitt (210, 213) erstes Rückkopplungslicht von der optischen Platte (7) empfängt, und einem zweiten Hochfrequenzsignal, das erhalten wird, indem der zweite Fotodetektionsabschnitt (211, 212) zweites Rückkopplungslicht von der optischen Platte (7) empfängt;

und,
nachdem ein Spurfehlersignal basierend mindestens auf dem erzeugten Hochfrequenz-Differenzsignal erzeugt worden ist:

Steuern eines Aktuators (5) durch einen Treiber (4) derart, dass ein Servobetrieb, in dem der Strahlfleck (202) der Spur nachgesteuert wird, gemäß einem Ausgangssignal der Lichtempfangseinrichtung (2) ausgeführt wird;

wobei die Steuerung derart ausgeführt wird, dass das erzeugte Spurfehlersignal binarisiert wird und ein eine Anstiegs- und eine Abfallflanke des binarisierten Spurfehlersignals anzeigendes Spurfehlerflankensignal extrahiert wird, nachdem ein Band des von der Lichtempfangseinrichtung (2) zugeführten ersten und zweiten Hochfrequenzsignals gefiltert worden ist und das erste und das zweite Hochfrequenzsignal binarisiert worden sind;
**dadurch gekennzeichnet dass**
der Start eines Betriebs zum Hereinziehen einer Spursteuerungs-Servo in Antwort auf das Spurfehlerflankensignal ausgeführt wird, wenn die binarisierten ersten und zweiten Hochfrequenzsignale den gleichen vorgegebenen Pegel aufweisen.

2. Verfahren nach Anspruch 1, wobei eine Einstellung derart vorgenommen wird, dass das Spurfehlersignal den Wert 0 (null) annimmt, wenn der Strahlfleck (202) an einer Mitte der Spur angeordnet ist.

3. Verfahren nach Anspruch 1 oder 2, wobei eine Einstellung derart vorgenommen wird, dass das Spurfehlerflankensignal extrahiert wird, wenn der Strahlfleck (202) entweder eine Mitte der Spur oder eine Mitte eines Bereichs zwischen zwei benachbarten Spuren erreicht hat.

4. Verfahren nach Anspruch 1, 2 oder 3, wobei die Steuerung derart ausgeführt wird, dass, nachdem ein Band des ersten und des zweiten Hochfrequenzsignals gefiltert worden ist, die gefilterten Signale binarisiert werden, wobei, wenn sowohl das binarisierte erste als auch das binarisierte zweite Hochfrequenzsignal einen niedrigen Pegel aufweisen, in Antwort auf das Spurfehlerflankensignal ein Betrieb zum Hereinziehen einer Spursteuerungs-Servo ausgeführt wird.

5. Verfahren nach einem der Ansprüche 1 bis 4, wobei der erste und der zweite Fotodetektionsabschnitt (210, 211, 212, 213) entlang der Umfangsrichtung der Spur jeweils weiter geteilt sind in einen vorderen Fotodetektionsabschnitt und einen hinteren Fotodetektionsabschnitt, und wobei das erste und das zweite Hochfrequenzsignal jeweils durch Addieren eines vorderen Ausgangssignals vom vorderen Fotodetektionsabschnitt und eines hinteren Ausgangssignals vom hinteren Fotodetektionsabschnitt erhalten werden.

6. Verfahren nach einem der Ansprüche 1 bis 5, wobei die Bewegung des Strahlflecks (202) durch den Aktuator (5) durch Bewegen einer Objektivlinse in der Lichtquelle (1) ausgeführt wird.

7. Verfahren nach einem der Ansprüche 1 bis 6,
wobei die Lichtempfangseinrichtung (2) ferner aufweist:

einen ersten Unter-Fotodetektor (12A), der an einer Position angeordnet ist, die von einer Mitte des mehrfach geteilten Fotodetektors (11) links um 1/2 Spurabstand in eine Richtung quer zur Spur beabstandet ist, und einen ersten linken Fotodetektionsabschnitt und einen ersten rechten Fotodetektionsabschnitt aufweist, die derart angeordnet sind, dass sie bezüglich einer Umfangsrichtung der optischen Platte (7) rechts und links geteilt sind, und
einen zweiten Unter-Fotodetektor (12B), der an einer Position angeordnet ist, die von einer Mitte des mehrfach geteilten Fotodetektors (11) rechts um 1/2 Spurabstand in eine Richtung quer zur Spur beabstandet ist, und einen zweiten linken Fotodetektionsabschnitt und einen zweiten rechten Fotodetektionsabschnitt aufweist, die derart angeordnet sind, dass sie bezüglich einer Umfangsrichtung der optischen Platte (7) rechts und links geteilt sind,

wobei die Konfiguration derart ist, dass Rückkopplungslicht eines Teilstrahls (202A, 202B) von der optischen Platte (7) empfangen wird, wobei der Teilstrahl (202A, 202B) durch Teilen eines von einer Lichtquelle (1) ausgegebenen Strahls erhalten wird, und ein erstes Erfassungssignal erhalten wird durch Addieren von Signalen, die vom ersten und zweiten linken Fotodetektionsabschnitt im ersten und zweiten Teil-Fotodetektor (12A, 12B) ausgegeben werden, und ein zweites Erfassungssignal erhalten wird durch Addieren von Signalen, die vom ersten und zweiten rechten Fotodetektionsabschnitt im ersten und zweiten Teil-Fotodetektor (12A, 12B) ausgegeben werden, und ein Teil-Differenzsignal erzeugt wird durch Berechnen einer Differenz zwischen dem erhaltenen ersten Erfassungssignal und dem erhaltenen zweiten Erfassungssignal und anschließend das Spurfehlersignal basierend auf einer Differenz zwischen dem erzeugten Teil-Differenzsignal und dem Hochfrequenz-Differenzsignal erzeugt wird.

8.  Verfahren nach einem der Ansprüche 1 bis 7, wobei der erste und der zweite Fotodetektionsabschnitt (210, 211, 212, 213) entlang der Umfangsrichtung der Spur jeweils weiter unterteilt sind in einen vorderen Fotodetektionsabschnitt und einen hinteren Fotodetektionsabschnitt, und wobei das erste und das zweite Hochfrequenzsignal jeweils erhalten werden durch Addieren eines vorderen Ausgangssignals vom vorderen Fotodetektionsabschnitt und eines hinteren Ausgangssignals vom hinteren Fotodetektionsabschnitt, wobei
die Lichtempfangseinrichtung (2) ferner aufweist:

einen ersten Unter-Fotodetektor (12A), der an einer Position angeordnet ist, die in einer Richtung quer zur Spur von einer Mitte des mehrfach geteilten Fotodetektors (11) links um 1/2 Spurabstand beabstandet ist und einen ersten linken Fotodetektionsabschnitt und einen ersten rechten Fotodetektionsabschnitt aufweist, die derart angeordnet sind, dass sie bezüglich einer Umfangsrichtung der optischen Platte (7) rechts und links geteilt sind, und
einen zweiten Unter-Fotodetektor (12B), der an einer Position angeordnet ist, die in einer Richtung quer zur Spur von einer Mitte des mehrfach geteilten Fotodetektors (11) rechts um 1/2 Spurabstand beabstandet ist und einen zweiten linken Fotodetektionsabschnitt und einen zweiten rechten Fotodetektionsabschnitt aufweist, die derart angeordnet sind, dass sie bezüglich einer Umfangsrichtung der optischen Platte (7) rechts und links geteilt sind,

wobei die Konfiguration derart ist, dass Rückkopplungslicht eines Teilstrahls (202A, 202B) von der optischen Platte (7) empfangen wird, wobei der Teilstrahl (202A, 202B) durch Teilen eines von einer Lichtquelle (1) ausgegebenen Strahls erhalten wird, und ein erstes Erfassungssignal erhalten wird durch Addieren der Ausgangssignale vom ersten und zweiten linken Fotodetektionsabschnitt des ersten und des zweiten Unter-Fotodetektors (12A, 12B) und ein zweites Erfassungssignal erhalten wird durch Addieren der vom ersten und zweiten rechten Fotodetektionsabschnitt des ersten und des zweiten Unter-Fotodetektors (12A, 12B) ausgegebenen Signale, und ein Teil-Differenzsignal erzeugt wird durch Berechnen einer Differenz zwischen dem erhaltenen ersten Erfassungssignal und dem erhaltenen zweiten Erfassungssignal, und anschließend das Spurfehlersignal basierend auf einer Differenz zwischen dem erzeugten Teil-Differenzsignal und dem Hochfrequenz-Differenzsignal erzeugt wird.

9.  Spursteuerungs-Servovorrichtung mit:

einer Lichtquelle (1) zum Zuführen eines Strahlflecks (202) auf eine optische Platte (7), auf der eine Spur ausgebildet ist;
einer Lichtempfangseinrichtung (2) mit einem mehrfach geteilten Fotodetektor (11) mit einem ersten Fotodetektionsabschnitt (210, 213) und einem zweiten Fotodetektionsabschnitt (211, 212), die derart angeordnet sind, daß sie bezüglich einer Umfangsrichtung der optischen Platte (7) rechts und links geteilt sind, um ein erstes Hochfrequenzsignal zu erzeugen, indem der erste Fotodetektionssungsabschnitt (210, 213) erstes Rückkopplungslicht von der optischen Platte (7) empfängt, und ein zweites Hochfrequenzsignal zu erzeugen, indem der zweite Fotodetektionsabschnitt (211, 212) zweites Rückkopplungslicht von der optischen Platte (7) empfängt, und ein Hochfrequenz-Differenzsignal zu erzeugen durch Berechnen einer Differenz zwischen dem erzeugten ersten Hochfrequenzsignal und dem erzeugten zweiten Hochfrequenzsignal und ein Spurfehlersignal basierend mindestens auf dem erzeugten Hochfrequenz-Differenzsignal zu erzeugen;
einer Steuereinrichtung (3) zum Binarisieren des von der Lichtempfangseinrichtung (2) zugeführten Spurfehlersignals und zum Extrahieren eines eine Anstiegs- und eine Abfallflanke des binarisierten Spurfehlersignals anzeigenden Spurfehlerflankensignals, und zum Erzeugen eines Steuersignals gemäß einem Ausgangssignal der Lichtempfangseinrichtung (2), nachdem ein Band der von der Lichtempfangseinrichtung (2) zugeführten ersten und zweiten Hochfrequenzsignale gefiltert wurde und die gefilterten Signale binarisiert wurden;
einem Treiber (4) zum Erzeugen eines Treibersignals in Antwort auf das Steuersignal; und
einem Aktuator (5) zum Bewegen des Strahlflecks (202) in Antwort auf das vom Treiber (4) zugeführte Treibersignal;
**dadurch gekennzeichnet, dass**
die Steuereinrichtung einen Betrieb zum Hereinziehen einer Spursteuerungs-Servo in Antwort auf das Spurfehlerflankensignal startet, wenn die binarisierten ersten und zweiten Hochfrequenzsignale den gleichen vorgegebenen Pegel aufweisen.

**10.** Vorrichtung nach Anspruch 9, wobei eine Einstellung derart vorgenommen wird, dass das Spurfehlersignal den Wert 0 (null) annimmt, wenn der Strahlfleck (202) an einer Mitte der Spur angeordnet ist.

**11.** Vorrichtung nach Anspruch 9 oder 10, wobei eine Einstellung derart vorgenommen wird, dass das Spurfehlerflankensignal extrahiert wird, wenn der Strahlfleck (202) entweder eine Mitte der Spur oder eine Mitte eines Bereichs zwischen zwei benachbarten Spuren erreicht hat.

**12.** Vorrichtung nach Anspruch 9, 10 oder 11, wobei die Steuerung derart ausgeführt wird, dass, nachdem ein Band des ersten und des zweiten Hochfrequenzsignals gefiltert worden ist, die gefilterten Signale binarisiert werden, wobei, wenn sowohl das binarisierte erste als auch das binarisierte zweite Hochfrequenzsignal einen niedrigen Pegel aufweisen, in Antwort auf das Spurfehlerflankensignal ein Betrieb zum Hereinziehen einer Spursteuerungs-Servo ausgeführt wird.

**13.** Vorrichtung nach einem der Ansprüche 9 bis 12, wobei der erste und der zweite Fotodetektionsabschnitt (210, 211, 212, 213) entlang der Umfangsrichtung der Spur jeweils weiter geteilt sind in einen vorderen Fotodetektionsabschnitt und einen hinteren Fotodetektionsabschnitt, und wobei das erste und das zweite Hochfrequenzsignal jeweils durch Addieren eines vorderen Ausgangssignals vom vorderen Fotodetektionsabschnitt und eines hinteren Ausgangssignals vom hinteren Fotodetektionsabschnitt erhalten werden.

**14.** Vorrichtung nach einem der Ansprüche 9 bis 13, wobei die Bewegung des Strahlflecks (202) durch den Aktuator (5) durch Bewegen einer Objektivlinse in der Lichtquelle (1) ausgeführt wird.

**15.** Vorrichtung nach einem der Ansprüche 9 bis 14, wobei die Lichtempfangseinrichtung (2) ferner aufweist:

einen ersten Unter-Fotodetektor (12A), der an einer Position angeordnet ist, die in einer Richtung quer zur Spur von einer Mitte des mehrfach geteilten Fotodetektors (11) links um 1/2 Spurabstand beabstandet ist und einen ersten linken Fotodetektionsabschnitt und einen ersten rechten Fotodetektionsabschnitt aufweist, die derart angeordnet sind, dass sie bezüglich einer Umfangsrichtung der optischen Platte (7) rechts und links geteilt sind, und

einen zweiten Unter-Fotodetektor (12B), der an einer Position angeordnet ist, die in einer Richtung quer zur Spur von einer Mitte des mehrfach geteilten Fotodetektors (11) rechts um 1/2 Spurabstand beabstandet ist und einen zweiten linken Fotodetektionsabschnitt und einen zweiten rechten Fotodetektionsabschnitt aufweist, die derart angeordnet sind, dass sie bezüglich der Umfangsrichtung der optischen Platte (7) rechts und links geteilt sind,

wobei die Konfiguration derart ist, dass Rückkopplungslicht eines Teilstrahls (202A, 202B) von der optischen Platte (7) empfangen wird, wobei der Teilstrahl (202A, 202B) durch Teilen eines von einer Lichtquelle (1) ausgegebenen Strahls erhalten wird, und ein erstes Erfassungssignal erhalten wird durch Addieren der Ausgangssignale vom ersten und zweiten linken Fotodetektionsabschnitt des ersten und des zweiten Unter-Fotodetektors (12A, 12B) und ein zweites Erfassungssignal erhalten wird durch Addieren der vom ersten und zweiten rechten Fotodetektionsabschnitt des ersten und des zweiten Unter-Fotodetektors (12A, 12B) ausgegebenen Signale, und ein Teil-Differenzsignal erzeugt wird durch Berechnen einer Differenz zwischen dem erhaltenen ersten Erfassungssignal und dem erhaltenen zweiten Erfassungssignal, und anschließend das Spurfehlersignal basierend auf einer Differenz zwischen dem erzeugten Teil-Differenzsignal und dem Hochfrequenz-Differenzsignal erzeugt wird.

**16.** Vorrichtung nach einem der Ansprüche 9 bis 15, wobei der erste und der zweite Fotodetektionsabschnitt (210, 211, 212, 213) entlang der Umfangsrichtung der Spur jeweils weiter unterteilt sind in einen vorderen Fotodetektionsabschnitt und einen hinteren Fotodetektionsabschnitt, und wobei das erste und das zweite Hochfrequenzsignal jeweils erhalten werden durch Addieren eines vorderen Ausgangssignals vom vorderen Fotodetektionsabschnitt und eines hinteren Ausgangssignals vom hinteren Fotodetektionsabschnitt,
wobei die Lichtempfangseinrichtung (2) ferner aufweist:

einen ersten Unter-Fotodetektor (12A), der an einer Position angeordnet ist, die in einer Richtung quer zur Spur von einer Mitte des mehrfach geteilten Fotodetektors (11) links um 1/2 Spurabstand beabstandet ist und einen ersten linken Fotodetektionsabschnitt und einen ersten rechten Fotodetektionsabschnitt aufweist, die derart angeordnet sind, dass sie bezüglich einer Umfangsrichtung der optischen Platte (7) rechts und links geteilt sind, und
einen zweiten Unter-Fotodetektor (12B), der an einer Position angeordnet ist, die in einer Richtung quer zur Spur von einer Mitte des mehrfach geteilten Fotodetektors (11) rechts um 1/2 Spurabstand beabstandet ist und einen zweiten linken Fotodetektionsabschnitt und einen zweiten rechten Fotodetektionsabschnitt aufweist, die derart angeordnet sind, dass sie bezüglich einer Umfangsrichtung der optischen Platte (7) rechts und links geteilt sind,

wobei die Konfiguration derart ist, dass Rückkopplungslicht eines Teilstrahls (202A, 202B) von der optischen Platte (7) empfangen wird, wobei der Teilstrahl (202A, 202B) durch Teilen eines von einer Lichtquelle (1) ausgegebenen Strahls erhalten wird, und ein erstes Erfassungssignal erhalten wird durch Addieren der Ausgangssignale vom ersten und zweiten linken Fotodetektionsabschnitt des ersten und des zweiten Unter-Fotodetektors (12A, 12B) und ein zweites Erfassungssignal erhalten wird durch Addieren der vom ersten und zweiten rechten Fotodetektionsabschnitt des ersten und des zweiten Unter-Fotodetektors (12A, 12B) ausgegebenen Signale, und ein Teil-Differenzsignal erzeugt wird durch Berechnen einer Differenz zwischen dem erhaltenen ersten Erfassungssignal und dem erhaltenen zweiten Erfassungssignal, und anschließend das Spurfehlersignal basierend auf einer Differenz zwischen dem erzeugten Teil-Differenzsignal und dem Hochfrequenz-Differenzsignal erzeugt wird.

17. Vorrichtung für optische Platten (7) mit einer Spursteuerungs-Servovorrichtung nach einem der Ansprüche 9 bis 16.

## Revendications

1. Procédé d'exploitation d'un servomécanisme de suivi de piste comprenant :

l'application d'une tache de faisceau (202) sur un disque optique (7) sur lequel une piste est formée ; la réception d'une lumière en retour provenant dudit disque optique (7) par des moyens de réception de lumière (2) qui sont équipés d'un photo-détecteur multidivisé (11) comprenant une première portion photodétectrice (210, 213) et une deuxième portion photodétectrice (211, 212) qui est montée d'une manière à être divisée à droite et à gauche par rapport à un sens circonférentiel dudit disque optique (7) ; recevant la lumière en retour dudit disque optique (7) et

la production d'un signal différentiel haute fréquence en calculant une différence entre un premier signal haute-fréquence obtenu lorsque ladite première portion photodétectrice (210, 213) reçoit une première lumière en retour dudit disque optique (7) et un deuxième signal haute fréquence obtenu lorsque ladite deuxième portion photo-détectrice (211, 212) reçoit une deuxième lumière en retour dudit disque optique (7) et, après qu'un signal d'erreur de suivi de piste a été produit basé sur, au moins, le signal différentiel haute fréquence produit,

la commande d'un actionneur (5) au moyen d'un élément d'entraînement (4) de sorte qu'une servoexploitation dans laquelle ladite tache de faisceau (202) poursuit ladite piste est réalisée selon une sortie provenant desdits moyens de réception de lumière (2) ;

dans lequel la commande est exercée de manière telle que le signal d'erreur de suivi de piste produit est binarisé et un signal de flanc d'erreur de suivi de piste indiquant un flanc de montée et de descente du signal d'erreur de suivi de piste binarisé est extrait, après avoir filtré une bande de chacun desdits premier et deuxième signaux haute fréquence introduits à partir desdits moyens de réception de lumière (2), et lesdits premier et deuxièmes signaux haute fréquence sont binarisés,
**caractérisé en ce que** le début de la traction dans le servomécanisme de suivi de piste est réalisé en réponse audit signal de flanc d'erreur de suivi de piste, lorsque les premier et deuxième signaux haute fréquence binarisés sont à un même niveau spécifié.

2. Procédé selon la revendication 1, dans lequel le réglage est fait de sorte que ledit signal d'erreur de suivi de piste devient 0 (zéro) lorsque ladite tache de faisceau (202) est positionnée au centre de ladite piste.

3. Procédé selon la revendication 1 ou 2, dans lequel le réglage est fait de sorte que ledit signal de flanc d'erreur de suivi de piste est extrait lorsque ladite tache de faisceau (202) a atteint soit un centre de ladite piste, soit un centre d'une région entre les deux pistes adjacentes l'une à l'autre.

4. Procédé selon la revendication 1, 2 ou 3, dans lequel la commande est exercée de sorte qu'après qu'une bande de chacun desdits premier et deuxième signaux haute fréquence a été filtrée, les signaux filtrés sont binarisés et, lorsque les deux premier et deuxième signaux haute fréquence binarisés sont à un niveau bas, une opération de traction dans un servomécanisme de suivi de piste est réalisée en réponse audit signal de flanc d'erreur de suivi de piste.

**5.** Procédé selon l'une quelconque des revendications 1 à 4, dans lequel chacune desdites première et deuxième portions photodétectrices (210, 211, 212, 213) est divisée en une portion photodétectrice avant et une portion photodétectrice arrière le long du sens de la circonférence de ladite piste, et dans lequel lesdits premier et deuxième signaux haute fréquence sont chacun obtenus en ajoutant un signal de sortie avant à partir de ladite portion photodétectrice avant et un signal de sortie arrière à partir de ladite portion photodétectrice arrière.

**6.** Procédé selon l'une quelconque des revendications 1 à 5, dans lequel le mouvement de ladite tache de faisceau (202) par ledit actionneur (5) est accompli par le mouvement d'une lentille d'objectif dans ladite source lumineuse (1).

**7.** Procédé selon l'une quelconque des revendications 1 à 6, dans lequel lesdits moyens de réception de lumière (2) comprennent en outre un premier sous-photodétecteur (12A) monté dans une position qui est isolée à gauche par ½ pas de ladite piste dans un sens de croisement de ladite piste à partir d'un centre dudit photodétecteur multidivisé (11) et comprenant une première portion photodétectrice gauche et une première portion photodétectrice droite montées de manière à être divisées à droite et à gauche par rapport au sens circonférentiel dudit disque optique (7), et un deuxième sous-photodétecteur (12B) monté dans une position qui est isolée à droite par ½ pas de ladite piste dans un sens de croisement de ladite piste à partir d'un centre dudit photodétecteur multidivisé (11) et comprenant une deuxième portion photodétectrice gauche et une deuxième portion photodétectrice droite montées de manière à être divisées à droite et à gauche par rapport au sens circonférentiel dudit disque optique (7), et étant configurées de cette façon de manière à recevoir la lumière en retour d'un sous-faisceau (202A, 202B) provenant dudit disque optique (7), ledit sous-faisceau (202A, 202B) étant obtenu en divisant une sortie de faisceau provenant d'une source lumineuse (1) et pour obtenir un premier signal de détection en ajoutant une sortie de signaux desdites première et deuxième portions photodétectrices gauches dans lesdits premier et deuxième sous-photodétecteurs (12A, 12B) et un deuxième signal de détection en ajoutant une sortie de signaux desdites première et deuxième portions photodétectrices droites dans lesdits premier et deuxième sous-photodétecteurs (12A, 12B), et pour produire un signal sous-différentiel en calculant une différence entre le premier signal de détection obtenu et le deuxième signal de détection obtenu, et pour produire ensuite ledit signal d'erreur de suivi de piste basé sur une différence entre le signal sous-différentiel produit et ledit signal différentiel haute fréquence.

**8.** Procédé selon l'une quelconque des revendications 1 à 7, dans lequel chacune desdites première et deuxième portions photodétectrices (210, 211, 212, 213) sont chacune divisées, en outre, en une portion photodétectrice avant et une portion photodétectrice arrière le long du sens circonférentiel de ladite piste, et dans lequel lesdits premier et deuxième signaux haute fréquence sont obtenus chacun en ajoutant un signal de sortie avant depuis ladite portion photodétectrice avant et un signal de sortie arrière depuis ladite portion photodétectrice arrière, et par ailleurs, dans lequel lesdits moyens de réception de lumière (2) comprennent un premier sous-photodétecteur (12A) monté dans une position qui est isolée à gauche par ½ pas de ladite piste dans un sens de croisement de ladite piste à partir d'un centre dudit photodétecteur multidivisé (11) et comprenant une première portion photodétectrice gauche et une première portion photodétectrice droite montées de manière à être divisées à droite et à gauche par rapport à un sens circonférentiel dudit disque optique (7) et un deuxième sous-photodétecteur (12B) monté dans une position qui est isolée à droite par ½ pas de ladite piste dans un sens de croisement de ladite piste à partir d'un centre dudit photodétecteur multidivisé (11) et comprenant une deuxième portion photodétectrice gauche et une deuxième portion photodétectrice droite montée de manière à être divisée à droite et à gauche par rapport au sens circonférentiel dudit disque optique (7), et étant configurées de cette façon de manière à recevoir la lumière en retour d'un sous-faisceau (202A, 202B) provenant dudit disque optique (7), ledit sous-faisceau (202A, 202B) étant obtenu en divisant une sortie de faisceau provenant d'une source lumineuse (1) et pour obtenir un premier signal de détection en ajoutant une sortie de signaux desdites première et deuxième portions photodétectrices gauches dans lesdits premier et deuxième sous-photodétecteurs (12A, 12B) et un deuxième signal de détection en ajoutant une sortie de signaux desdites première et deuxième portions photodétectrices droites dans lesdits premier et deuxième sous-photodétecteurs (12A, 12B), et pour produire un signal sous-différentiel en calculant une différence entre le premier signal de détection obtenu et le deuxième signal de détection obtenu, et pour produire ensuite ledit signal d'erreur de suivi de piste basé sur une différence entre le signal sous-différentiel produit et ledit signal différentiel haute fréquence.

**9.** Servoappareil de suivi de piste comprenant :

une source lumineuse (1) pour appliquer une tache de faisceau (202) sur un disque optique (7) sur lequel une piste est formée ;
des moyens de réception de lumière (2) ayant un photodétecteur multidivisé (11) comprenant une première portion photodétectrice (210, 213) et une deuxième portion photodétectrice (211, 212) qui sont montées de manière à être divisées à droite et à gauche par rapport à un sens circonférentiel dudit disque optique (7) pour produire un premier signal haute fréquence en ayant ladite première portion photodétectrice (210, 213) recevant la première lumière en retour provenant dudit disque optique (7) et un deuxième signal haute fréquence en ayant ladite deuxième portion photodétectrice (211, 212) recevant la deuxième lumière en retour provenant dudit disque optique (7) et pour produire un signal différentiel haute fréquence en calculant une différence entre le premier signal haute fréquence produit et le deuxième signal haute fréquence produit et pour produire un signal d'erreur de suivi de piste basé sur, au moins, le signal différentiel haute fréquence produit ;

des moyens de commande (3) pour binariser ledit signal d'erreur de suivi de piste provenant desdits moyens de réception de lumière (2) et pour extraire un signal de flanc d'erreur de suivi de piste indiquant un flanc de montée et de descente du signal d'erreur de suivi de piste binarisé et, après avoir filtré une bande de chacun desdits premier et deuxième signaux haute fréquence amenés depuis lesdits moyens de réception de lumière (2), pour binariser les signaux filtrés pour produire un signal de commande selon une sortie desdits moyens de réception de lumière (2),

un élément d'entraînement (4) pour produire un signal d'entraînement en réponse audit signal de commande ;

et un actionneur (5) pour déplacer ladite tache de faisceau (202) en réponse audit signal d'entraînement amené à partir dudit élément d'entraînement (4),

**caractérisé en ce que** lesdits moyens de commande commencent à actionner un servomécanisme de suivi de piste en réponse audit signal de flanc d'erreur de suivi de piste, lorsque les premier et deuxième signaux haute fréquence binarisés sont à un même niveau spécifié.

10. Appareil selon la revendication 9, dans lequel le réglage est fait de sorte que ledit signal d'erreur de suivi de piste devient 0 (zéro) lorsque ladite tache de faisceau (202) est positionnée au centre de ladite piste.

11. Appareil selon la revendication 9 ou 10, dans lequel le réglage est fait de sorte que ledit signal de flanc d'erreur de suivi de piste est extrait lorsque ladite tache de faisceau (202) a atteint soit un centre de ladite piste, soit un centre d'une région entre les deux pistes adjacentes l'une à l'autre.

12. Appareil selon la revendication 9, 10 ou 11, dans lequel la commande est exercée de sorte qu'après qu'une bande de chacun desdits premier et deuxième signaux haute fréquence a été filtrée, les signaux filtrés sont binarisés et, lorsque les deux premier et deuxième signaux haute fréquence binarisés sont à un niveau bas, une opération de traction dans un servomécanisme de suivi de piste est réalisée en réponse audit signal de flanc d'erreur de suivi de piste.

13. Appareil selon l'une quelconque des revendications 9 à 12, dans lequel chacune desdites première et deuxième portions photodétectrices (210, 211, 212, 213) est, en outre, divisée en une portion photodétectrice avant et une portion photodétectrice arrière le long du sens de la circonférence de ladite piste, et dans lequel lesdits premier et deuxième signaux haute fréquence sont obtenus chacun en ajoutant un signal de sortie avant provenant de ladite portion photodétectrice avant et un signal de sortie arrière provenant de ladite portion photodétectrice arrière.

14. Appareil selon l'une quelconque des revendications 9 à 13, dans lequel le mouvement de ladite tache de faisceau (202) par ledit actionneur (5) est accompli par mouvement d'une lentille d'objectif dans ladite source lumineuse (1).

15. Appareil selon l'une quelconque des revendications 9 à 14, dans lequel lesdits moyens de réception de lumière (2) comprennent, en outre, un premier sous-photodétecteur (12A) monté dans une position qui est isolée à gauche par ½ pas de ladite piste dans un sens de croisement de ladite piste à partir d'un centre dudit photodétecteur multidivisé (11) et comprenant une première portion photodétectrice gauche et une première portion photodétectrice droite montées de manière à être divisées à droite et à gauche par rapport au sens circonférentiel dudit disque optique (7), et un deuxième sous-photodétecteur (12B) monté dans une position qui est isolée à droite par ½ pas de ladite piste dans un sens de croisement de ladite piste à partir d'un centre dudit photodétecteur multidivisé (11) et comprenant une deuxième portion photodétectrice gauche et une deuxième portion photodétectrice droite montées de manière à être divisées à droite et à gauche par rapport au sens circonférentiel dudit disque optique (7), et étant configurées de cette façon de manière à recevoir la lumière en retour d'un sous-faisceau (202A, 202B) provenant dudit disque optique (7), ledit sous-faisceau (202A, 202B) étant obtenu en divisant une sortie de faisceau d'une source lumineuse (1) et pour obtenir un premier signal de détection en ajoutant une sortie de signaux desdites première et deuxième portions photodétectrices gauches dans lesdits premier et deuxième sous-photodétecteurs (12A, 12B) et un deuxième signal de détection en ajoutant une sortie de signaux desdites première et deuxième portions photodétectrices droites dans lesdits premier et deuxième sous-photodétecteurs (12A, 12B), et pour produire un signal sous-différentiel en calculant une différence entre le premier signal de détection obtenu et le deuxième signal de détection obtenu, et pour produire ensuite ledit signal d'erreur de suivi de piste basé sur une différence entre le signal sous-différentiel produit et ledit signal différentiel haute fréquence.

16. Appareil selon l'une quelconque des revendications 9 à 15, dans lequel chacune desdites première et deuxième portions photo-détectrices (210, 211, 212, 213) sont chacune divisées en une portion photo-détectrice avant et une portion photo-détectrice arrière le long du sens de la circonférence de ladite piste, et dans lequel lesdits premier et deuxième signaux haute fréquence sont chacun obtenus en ajoutant un signal de sortie avant à partir de ladite portion photodétectrice avant et un signal de sortie arrière à partir de ladite portion photodétectrice arrière, et par ailleurs, dans lequel lesdits moyens de réception de lumière (2) comprennent, en outre, un premier sous-photodétecteur (12A) monté dans une position isolée à gauche par ½ pas de ladite piste dans un sens de croisement de ladite piste à partir d'un centre dudit photodétecteur multidivisé (11) et comprenant une première portion photodétectrice gauche et une première portion photodétectrice droite montées de manière à être divisées à droite et à gauche par rapport au sens circonférentiel dudit disque optique (7), et un deuxième sous-photodétecteur (12B) monté dans une position qui est isolée à droite par ½ pas de ladite piste dans un sens de croisement de ladite piste à partir d'un centre dudit photodétecteur multidivisé (11) et comprenant une deuxième portion photodétectrice gauche et une deuxième portion photodétectrice droite montées de manière à être divisées à droite et à gauche par rapport au sens circonférentiel dudit disque optique (7), et étant configurées de cette façon de manière à recevoir la lumière en retour d'un sous-faisceau (202A, 202B) provenant dudit disque optique (7), ledit sous-faisceau (202A, 202B) étant obtenu en divisant une sortie de faisceau provenant d'une source lumineuse (1) et pour obtenir un premier signal de détection en ajoutant une sortie de signaux desdites première et deuxième portions photodétectrices gauches dans lesdits premier et deuxième sous-photodétecteurs (12A, 12B) et un deuxième signal de détection en ajoutant une sortie de signaux desdites première et deuxième portions photodétectrices droites dans lesdits premier et deuxième sous-photodétecteurs (12A, 12B), et pour produire un signal sous-différentiel en calculant une différence entre le premier signal de détection obtenu et le deuxième signal de détection obtenu, et pour produire ensuite ledit signal d'erreur de suivi de piste basé sur une différence entre le signal sous-différentiel produit et ledit signal différentiel haute fréquence.

17. Dispositif de disque optique (7) muni d'un servoappareil de suivi de piste selon l'une quelconque des revendications 9 à 16.

FIG.1

# FIG.2

2;PDIC

12A — $E_1$ $F_1$

13 — TE signal

$\begin{array}{|c|c|} A & B \\ D & C \end{array}$ — 11

12B — $E_2$ $F_2$

14

15

(A+D) HF signal

(B+C) HF signal

3;controlling section

17 — binarizing section

18 — edge extracting section

TE edge signal

21 — arithmetic operational processing section

(A+D) HF binarized signal

22 — BPF

23 — binarizing section

24 — BPF

25 — binarizing section

(B+C) HF binarized signal

controlling signal

EP 1 455 347 B1

**FIG.3**

*FIG.4 (PRIOR ART)*

7; optical disk

6A ;
optical
pickup

5; actuator

3A

light
source

PDIC

TE signal

controlling section

HF signal

1

2A

driver

4

EP 1 455 347 B1

EP 1 455 347 B1

**FIG.5 (PRIOR ART)**

3A ;controlling section

2A :PDIC

21A arithmetic operational processing section

18 edge extracting section 208

TE edge signal 207

17 binarizing section

TE signal 206

13 TE signal

14

15

11 A B / D C

12A E₁F₁

12B E₂F₂

16 HF signal 203

19 BPF 204

20 binarizing section

205 HF binarized signal

controlled signal

## FIG.6 (PRIOR ART)

201; signal face

202A

$E_1$ $F_1$

12A

pit

11 202

A B
D C

202B

$E_2$ $F_2$

12B

signal track

mirror section

## FIG. 7 (PRIOR ART)

## FIG.8 (PRIOR ART)

## *FIG.9 (PRIOR ART)*

501

502

503

**FIG.10 (PRIOR ART)**

**EP 1 455 347 B1**

## REFERENCES CITED IN THE DESCRIPTION

### Patent documents cited in the description

- JP 2003050951 A
- US 6400662 B1